# EUROPEAN PATENT SPECIFICATION

(11) **EP 1 534 526 B1**
(45) Date of publication and mention of the grant of the patent: **27.07.2011**
(21) Application number: 03760479.0
(22) Date of filing: 18.06.2003
(51) Int. Cl.: B41J 2/14, G01N 29/02, G01F 23/296, G01N 9/00, B01J 19/00, B01L 3/02

(54) **ACOUSTIC ASSESSMENT AND/OR CONTROL OF FLUID CONTENT IN A RESERVOIR**
AKUSTISCHE BEWERTUNG UND/ODER STEUERUNG DES FLUIDGEHALTS IN EINEM BEHÄLTER
EVALUATION ACOUSTIQUE ET/OU CONTROLE DU CONTENU LIQUIDE D'UN RESERVOIR

(30) Priority: 18.06.2002 US 175374; 04.12.2002 US 310638
(43) Date of publication of application: 01.06.2005
(73) Proprietor: Picoliter Inc., Sunnyvale, CA 94089 (US)
(72) Inventor: ELLSON, Richard, N., Palo Alto, CA 94306 (US); MUTZ, Mitchell, W., Palo Alto, CA 94306 (US); FOOTE, James, K., Cupertino, CA 95014 (US)
(74) Representative: Crump, Julian Richard John
(86) International application number: PCT/US2003/019490
(87) International publication number: WO 2003/106179

(56) References cited:
- EP-A- 1 209 466
- WO-A-02/24325
- WO-A-98/15501
- US-A- 5 424 766
- US-A- 5 520 715
- US-A- 6 044 694
- US-A1- 2002 037 375
- US-A1- 2002 037 579
- GOLDMANN T ET AL: "DNA-PRINTING: UTILIZATION OF A STANDARD INKJET PRINTER FOR THE TRANSFER OF NUCLEIC ACIDS TO AVOID SUPPORTS" , JOURNAL OF BIOCHEMICAL AND BIOPHYSICAL METHODS, AMSTERDAM, NL, VOL. 42, NR. 3, PAGE(S) 105-110 XP000889698 ISSN: 0165-022X

## Description

### TECHNICAL FIELD

The invention relates generally to the use of acoustic energy to assess and/or control fluid content in one or more reservoirs. In particular, the invention relates to devices and methods for acoustically assessing and/or controlling the contents of a plurality of reservoirs to enhance accuracy and precision in dispensing fluids from the reservoirs. The invention may be used with a reservoir containing at least one fluid comprised of a plurality of constituents, wherein at least one constituent is preferentially removed from the reservoir. The invention may also be used in conjunction with high-speed combinatorial synthetic and analytical systems that employ biomolecular libraries contained within a large number of different fluid reservoirs.

### BACKGROUND ART

There exists a need in pharmaceutical, biotechnological, and other scientific industries to be able to quickly screen, identify, and/or process large numbers or varieties of fluids, as well as to make and characterize new compositions of matter. As a result, much attention has been focused on developing combinatorial techniques that require efficient, precise, and accurate fluid handling methods. Since fluids used in pharmaceutical, biotechnological, and other scientific industries may be rare and/or expensive, techniques capable of handling small volumes of fluids provide readily apparent advantages over those requiring relatively larger volumes. Fluids for use in combinatorial methods are typically provided as a collection or library of organic and/or biological compounds. In many instances, well plates are used to store a large number of fluids for screening and/or processing. Well plates are typically of single piece construction and comprise a plurality of identical wells, wherein each well is adapted to contain a small volume of fluid. Such well plates are commercially available in standardized sizes and may contain, for example, 96, 384, 1536, or 3456 wells per well plate.

Such well plates are commonly used in high-speed combinatorial methods, which use array technologies that require accurate dispensing of fluids, each fluid having a precisely known chemical composition, concentration, stoichiometry, ratio of reagents, and/or volume. Such array technologies may be employed to carry out various synthetic processes and evaluations, which generally use small quantities of fluids. For example, array technologies may employ large numbers of different fluids contained in a plurality of reservoirs that, when arranged appropriately, create combinatorial libraries. Array technologies are desirable because they are commonly associated with speed and compactness.

Inventory and materials handling limitations generally dictate the capacity and efficiency of combinatorial methods to synthesize and analyze sample materials. For instance, pipettes or similar devices are often employed to dispense fluids through an opening into or out of the interior of a well within a well plate. In some instances, complex robotic and/or automated systems may be configured to handle a large number of sample fluids. When a pipetting system is employed during extraction, a minimum loading volume may be required for the system to function properly. Similarly, other fluid dispensing systems may require a certain minimum reservoir volume to function properly. Therefore, in any such fluid dispensing system it is important to monitor the reservoir contents to determine whether the minimum usable amount of fluid is provided. In addition, during the formatting and dispensing processes, selected wells within well plates that contain a plurality of materials may require thawing before their contents can be extracted for use in a combinatorial method. Content monitoring in such instances may be used to ensure that the formatting and dispensing processes are carried out only when the well contents are adequately thawed. In general, content monitoring serves to indicate and/or enhance the overall performance of a fluid dispensing system, as well as to maintain the integrity of the combinatorial methods.

When a fluid in a reservoir is exposed to an uncontrolled environment, environmental effects may play a role in detrimentally altering the composition and/or volume of the reservoir's contents. For example, when a solvent with a low boiling point is used to dissolve or suspend a compound of interest, evaporation of the solvent from the reservoir increases the concentration of compound therein. This, in turn, may cause dissolved compounds to precipitate out of solution, or suspended particles to agglomerate. For example, when tubing is employed, such precipitation and/or agglomeration may clog the tubing network. Conversely, dimethylsulfoxide (DMSO) is a common organic solvent employed to dissolve or suspend compounds commonly found in drug libraries. DMSO is highly hygroscopic and tends to absorb any ambient water with which it comes into contact. In turn, the absorption of water dilutes the concentration of the compounds as well as alters the ability of the DMSO to suspend the compounds. Furthermore, the absorption of water may promote the decomposition of water-sensitive compounds. Thus, it is important to control the composition and/or volume of the reservoir's contents to ensure that environmental effects are accounted for and addressed.

In order to achieve sufficient efficiency and precision, certain disadvantages associated with conventional fluid handling systems must be overcome. As alluded to above, most fluid handling systems presently in use require that contact be established between the fluid to be transferred and a solid surface. Such contact typically results in surface wetting that represents a source of unavoidable fluid waste, a notable drawback when the fluid to be transferred is rare and/or expensive. In addition, a number of fluid dispensing systems are constructed using networks of tubing or other fluid transporting conduits. Air bubbles can, for example, be entrapped or particulates may become lodged in tubing networks, which, in turn, can compromise fluid transport performance and result in diminished or misdirected fluid flow. In addition, it is important to control the quality of the starting materials in any chemical synthesis process. Otherwise, the integrity of the process and the quality of the resulting product are compromised. Quality control of the starting materials is a particularly important issue in combinatorial synthesis procedures.

Nozzleless acoustic ejection provides a number of advantages over other fluid dispensing technologies. In contrast to inkjet devices, nozzleless fluid ejection devices are not subject to clogging and their associated disadvantages, e.g., misdirected fluid or improperly sized droplets. Furthermore, acoustic technology does not require the use of tubing or involve invasive mechanical actions, such as those associated with the introduction of a pipette tip into a reservoir of fluid.

Acoustic technologies may be advantageously employed in fluid handling applications and have been described in a number of patents. For example, U.S. Patent No. 4,308,547 to Lovelady et al. describes a liquid drop emitter that utilizes acoustic radiation to eject droplets from a body of liquid onto a moving document to result in the formation of characters or barcodes thereon. A nozzleless inkjet printing apparatus is used such that controlled drops of ink are propelled by an acoustical force produced by a curved transducer at or below a free surface of the ink. More recently, acoustic ejection has been employed in contexts other than ink printing applications. For example, U.S. Patent Application Publication No. 20020037579 to Ellson et al. describes a device for acoustically ejecting a plurality of fluid droplets toward discrete sites on a substrate surface for deposition thereon. The device includes an acoustic radiation generator that may be used to eject fluid droplets from a reservoir, as well as to produce a detection acoustic wave that is transmitted to the fluid surface of the reservoir to become a reflected acoustic wave. Characteristics of the reflected acoustic radiation may then be analyzed in order to assess the spatial relationship between the acoustic radiation generator and the fluid surface.

Other patents and patent documents describe the use of acoustic radiation for ejection and/or detection. For example, pool depth feedback technology using acoustic radiation is described in U.S. Patent No. 5,520,715 to Oeftering. In addition, U.S. Patent Application Publication Nos. 20020037579 to Ellson et al. and 20020094582 to Williams describe similar acoustic detection technology. By incorporating acoustic detection technology, acoustic ejection methods may have the advantage of providing feedback relating to the process of acoustic ejection itself. Such feedback in turn may be employed to ensure, for example, that the acoustic radiation generator is maintained in proper relationship to a fluid surface in a reservoir for proper focus.

Acoustic radiation has also been used to assess the composition and/or volume of the contents of one or more fluid reservoirs. For example, U.S. Patent No. 5,507,178 to Dam describes a sensor for determining the presence of a liquid and for identifying the type of liquid in a container. The sensor determines the presence of the liquid through an ultrasonic liquid presence sensing means, and identifies the type of liquid through a liquid identification means that includes a pair of electrodes and an electrical pulse generating means. This device suffers from the disadvantage that the sensor must be placed in contact with the liquid.

U.S. Patent No. 5,880,364 to Dam, on the other hand, describes a non-contact ultrasonic system for measuring the volumes of liquids in a plurality of containers. An ultrasonic sensor is disposed opposite the top of the containers. A narrow beam of ultrasonic radiation is transmitted from the sensor to the open top of an opposing container, which is reflected from the air-liquid interface of the container back to the sensor. By using the roundtrip transit time of the radiation and the dimensions of the containers being measured, the volume of liquid in the container can be calculated. The device lacks precision because air is a poor conductor of acoustic energy, particularly at the high frequencies required to produce the small wavelengths beneficial to precision measurements. Thus, while this device may provide a rough estimate of the volume of liquid in relatively large containers, it is unsuitable for providing a detailed assessment of the composition and/or volume of fluids in small volume reservoirs that are typically used in combinatorial techniques. In particular, this device cannot determine the position of the bottoms of containers, since substantially all of the emitted acoustic energy is reflected from the liquid surface and does not penetrate sufficiently to detect the bottom. Small volume reservoirs such as those found in well plates are regular arrays of fluid containers, and the location of the container bottom can vary by a significant fraction of the nominal height of a container due to bow in the plate. In short, detection of only the position of the liquid surface leads to significant errors in fluid volume estimation in common containers.

More recently, U.S. Patent Application Publication No. 2003010819 to Mutz et al. describes the use of an acoustic generator to generate acoustic radiation used to eject fluid from a reservoir or to analyze a property of the fluid contained within the reservoir. By analyzing a characteristic of the acoustic radiation transmitted through the fluid, various properties of the fluid within the reservoir may be determined. In addition, such analysis may be carried out to determine the spatial relationship between a free surface of the fluid within the reservoir and other objects.

In general, acoustic technology as applied to reservoir content assessment involves using a single acoustic generator to interrogate reservoirs successively. As discussed in U.S. Patent Application Publication Nos. 20020037579 to Ellson et al. and 20020094582 to Williams et al., a generator for generating focused acoustic radiation is placed in acoustic coupling relationship to each of the reservoirs to interrogate them in succession. Accordingly, the generator, the reservoirs, or both must be physically displaced. Such "single point" auditing systems are of limited practical usefulness when large numbers of reservoirs are to be interrogated, because it would take too long to move the generator and/or the reservoirs. Using a plurality of such generators would increase the total cost and the complexity of a single point acoustic auditing system. In addition, such generators require additional space and are not easily incorporated into compact systems.

Thus, there is a need in the art for improved methods and devices that are capable of high-speed monitoring of the contents of a plurality of reservoirs, a capability that is particularly useful in synthetic and analytical processes to increase the robustness, efficiency, and effectiveness of the techniques employed therein. In addition, because dispensation accuracy, precision, and repeatability often depend upon the source from which a fluid is dispensed, there exists a need in the art to control the composition and/or volume of fluids within reservoirs. This need is present in various fluid dispensing techniques that involve the handling of small volumes of fluid (e.g., pipettes, capillaries, inkjet printheads, etc.), and is particularly significant when focused acoustic radiation is employed to eject droplets of fluid from a reservoir. Such precise control allows increased robustness, efficiency, and effectiveness of fluid delivery, which is especially valuable for processes such as combinatorial techniques, microfluidic applications, nucleotidic analyses, proteomic studies, and cellular assays. US 5424766A discloses a device and a method with a fixed acoustic generator for monitoring ink.

### DISCLOSURE OF THE INVENTION

The invention provides a device and a method according to claim 1 respectively claim 20. Preferred embodiments are defined in the depend claims.

In a first embodiment, the invention provides a device for acoustically assessing the contents of a plurality of reservoirs. The device is comprised of a plurality of reservoirs each adapted to contain a fluid, an acoustic radiation generator for generating acoustic radiation, a means for positioning the acoustic radiation generator, and an analyzer situated in radiation receiving relationship to the acoustic radiation generator. The generated acoustic radiation has an image field of a size sufficient to interrogate one or more selected reservoirs of the plurality at one time. The acoustic radiation generator is positioned by the positioning means in acoustic coupling relationship to at least the selected reservoirs. As a result, the acoustic radiation generated by the acoustic radiation generator is transmitted through an exterior surface of the selected reservoirs and through the selected reservoirs themselves, and the analyzer analyzes a characteristic of the transmitted acoustic radiation so as to assess the contents of the selected reservoirs.

Typically, the reservoirs are provided as a reservoir array, e.g., a rectilinear array, wherein the reservoirs of the reservoir array are acoustically indistinguishable from each other. In such a case, the image field may be of a size sufficient to interrogate at least a row of reservoirs at one time. In addition, the acoustic radiation generator may be an acoustic transducer assembly such as a linear, curvilinear, phased, or annular acoustic array. In such a case, the acoustic transducer assembly may be comprised of a plurality of vibrational elements, and the elements positioned such that they exhibit geometric correspondence to the reservoirs of the reservoir array. Preferably, the acoustic radiation generator and the analyzer form an integrated unit.

In addition, the acoustic generator is typically acoustically coupled to the reservoirs via a fluid acoustic coupling medium such as water. In such a case, the inventive device may further comprise a means for removing the fluid acoustic coupling medium from the reservoirs.

In another embodiment, the invention provides a method for acoustically assessing the contents of a plurality of reservoirs. The inventive method involves positioning an acoustic radiation generator in acoustic coupling relationship to selected reservoirs of a plurality of reservoirs, wherein the reservoirs are each adapted to contain a fluid. The acoustic radiation generator is actuated to generate acoustic radiation having an image field of a size sufficient to interrogate one or more selected reservoirs at one time so that the generated acoustic radiation is transmitted through an exterior surface of the selected reservoir and through the selected reservoirs. Then, a characteristic of the transmitted acoustic radiation is analyzed so as to assess the contents of each of the selected reservoirs. Optionally, fluid may be ejected from one or more of the reservoirs. When the acoustic radiation generator is acoustically coupled to the selected reservoirs via a fluid acoustic coupling medium, the inventive method may also involve fluid acoustic coupling medium removal from an exterior reservoir surface.

The invention also provides a device for controlling the composition and/or volume of a fluid within a reservoir. The device includes a reservoir adapted to contain a fluid, a means for monitoring a particular characteristic of the fluid contained in the reservoir, and an introducing means for introducing additional fluid into the reservoir based on the fluid characteristic monitored by the monitoring means. The device also includes an acoustic generator for generating acoustic radiation associated with the monitoring means, the introducing means, or both. The monitoring means typically does not directly contact fluid contained in the reservoir.

When the acoustic generator is associated with the monitoring means, the monitoring means further includes an analyzer for analyzing acoustic radiation generated by the acoustic generator. Typically, the analyzer is positioned to receive acoustic radiation generated by the acoustic generator and transmitted through any fluid contained in the reservoir. Optimally, the analyzer is positioned to receive acoustic radiation reflected by a free surface of any fluid contained in the reservoir. In such a case, the analyzer may share a common component, e.g., a piezoelectric element, with the acoustic generator.

In a further embodiment, the invention relates to a method for controlling the composition and/or volume of a fluid within a reservoir, which involves monitoring a characteristic of a fluid contained in a reservoir without directly contacting the fluid, then introducing additional fluid into the reservoir based on the monitored fluid characteristic. In some instances, the fluid characteristic is monitored acoustically, in which case the inventive method may involve generating acoustic radiation such that the radiation interacts with the fluid contained in the reservoir, then analyzing the acoustic radiation after interaction with the fluid to assess the fluid characteristic being monitored. For example, the acoustic radiation generated by the acoustic generator may be transmitted through the fluid in the reservoir and analyzed after interaction with the fluid. Optionally, the acoustic radiation may be analyzed after reflection from a free fluid surface within the reservoir.

In a still further embodiment, the invention relates to a method for controlling the composition and/or volume of a fluid within a reservoir. The method involves monitoring for preferential removal of at least one constituent from a reservoir containing a fluid comprised of a plurality of constituents, and introducing additional fluid comprised of the at least one constituent into the reservoir in response to any preferential removal of the at least one constituent as monitored. In some instances, the method involves using acoustic radiation to monitor for preferential removal of one or more constituents in the reservoir over another. In addition or in the alternative, additional fluid may be introduced into the reservoir through the use of acoustic radiation.

For any of the inventive devices and methods, a plurality of fluid reservoirs may be provided. In such a case, the composition and/or volume of fluid in each of the reservoirs may be monitored and controlled using the same monitoring means and the same introducing means. In addition, a means for dispensing fluid from any of the reservoirs may be provided. The dispensing means may employ acoustic dispensing technologies such as acoustic ejectors, which employ a focusing means for focusing acoustic radiation generated by the acoustic generator.

### BRIEF DESCRIPTION OF THE DRAWINGS

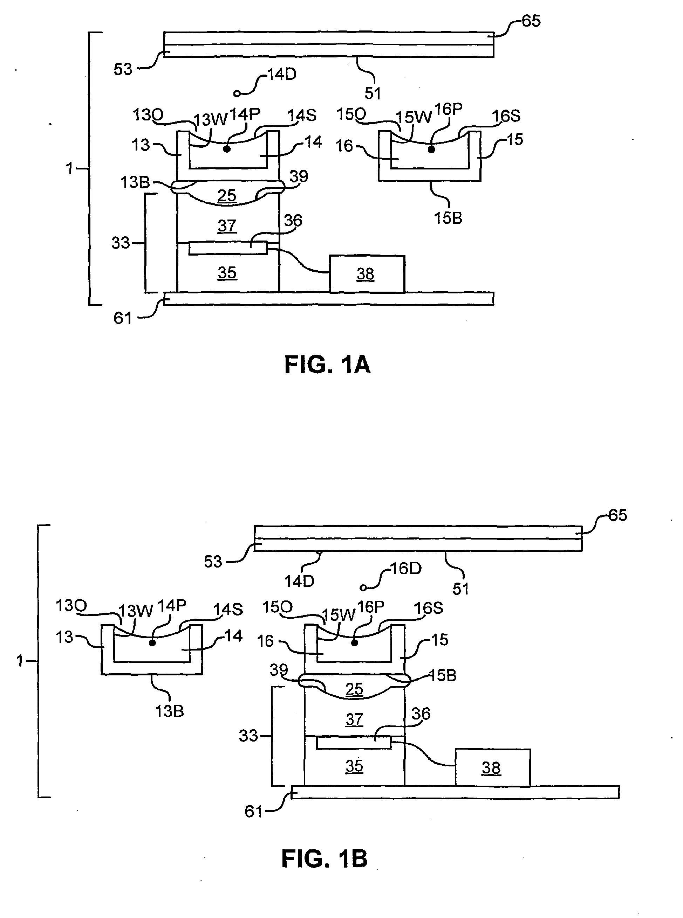

FIGS. 1A and 1B, collectively referred to as FIG. 1, schematically illustrate in simplified cross-sectional view a device that allows both the acoustic assessment in reflective mode of the contents of a plurality of reservoirs and the ejection of fluid droplets therefrom. As depicted, the device comprises first and second reservoirs, a combined acoustic analyzer and ejector, and an ejector positioning means. FIG. 1A shows the acoustic ejector acoustically coupled to the first reservoir; the ejector is activated in order to eject a droplet of fluid from within the first reservoir toward a site on a substrate surface to form an array. FIG. 1B shows the acoustic ejector acoustically coupled to a second reservoir.

FIG. 2 schematically illustrates in simplified cross-sectional view a device designed to permit acoustical assessment of the contents of a plurality of reservoirs in transmissive mode.

FIGS. 3A, 3B and 3C, collectively referred to as FIG. 3, schematically illustrate a rectilinear array of reservoirs in the form of a well plate having three rows and two columns of wells. FIG. 3A illustrates a well plate in top view. FIG. 3B illustrates the well plate in cross-sectional view along dotted line A. FIG. 3C illustrates the well plate in bottom view.

FIG. 4 schematically illustrates in side view a preferred embodiment of the device using the well plate depicted in FIG. 3.

FIG. 5 schematically illustrates a substrate having an array of droplets deposited thereon using the device depicted in FIG. 4.

FIGS. 6A, 6B, 6C, 6D, 6E and 6F, collectively referred to as FIG. 6, schematically illustrate the device depicted in FIG. 4 in operation to eject droplets of fluid to form the droplet array depicted in FIG. 5. FIGS. 6A-6D illustrates the device in side view. FIGS. 6E-6F illustrate the device in top view without the substrate.

FIG. 7 is a graph that plots measured echo delay time of interrogating acoustic radiation as a function of time after a toneburst perturbs a fluid surface.

FIG. 8 is a graph that plots the measured echo delay time for two different fluids as a function of time after a toneburst perturbs the fluids' surfaces.

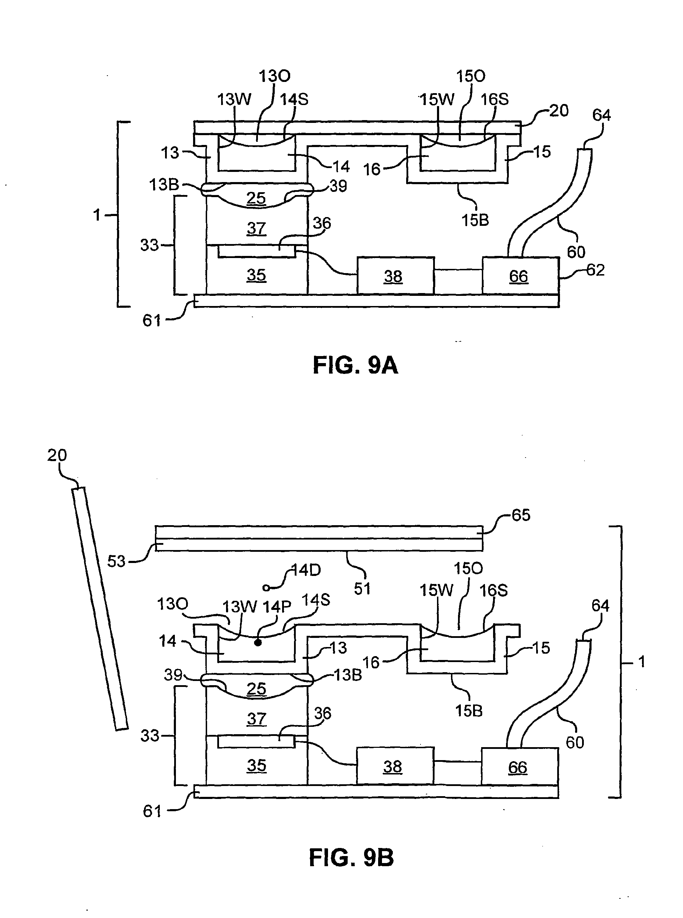

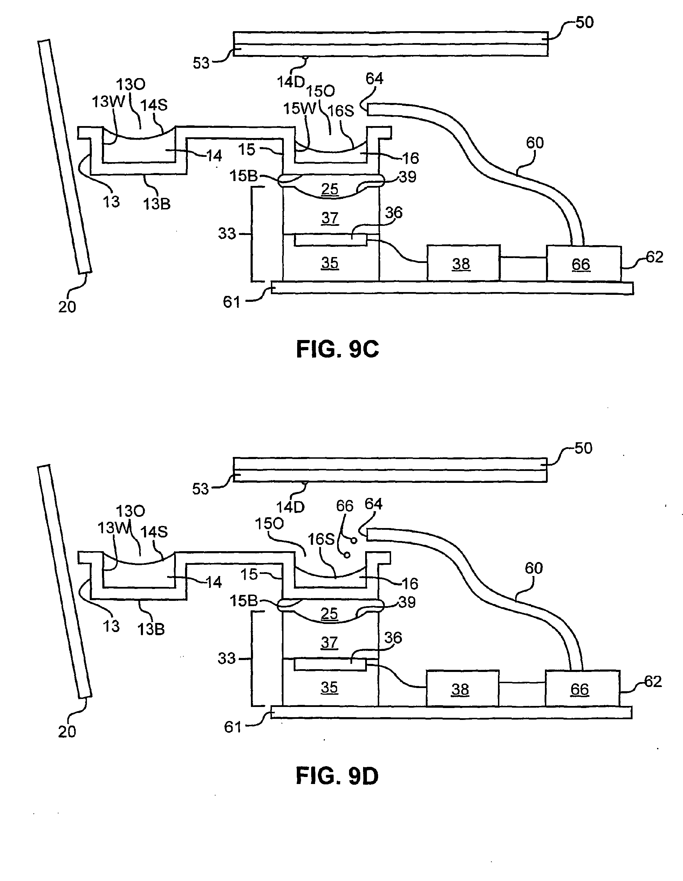

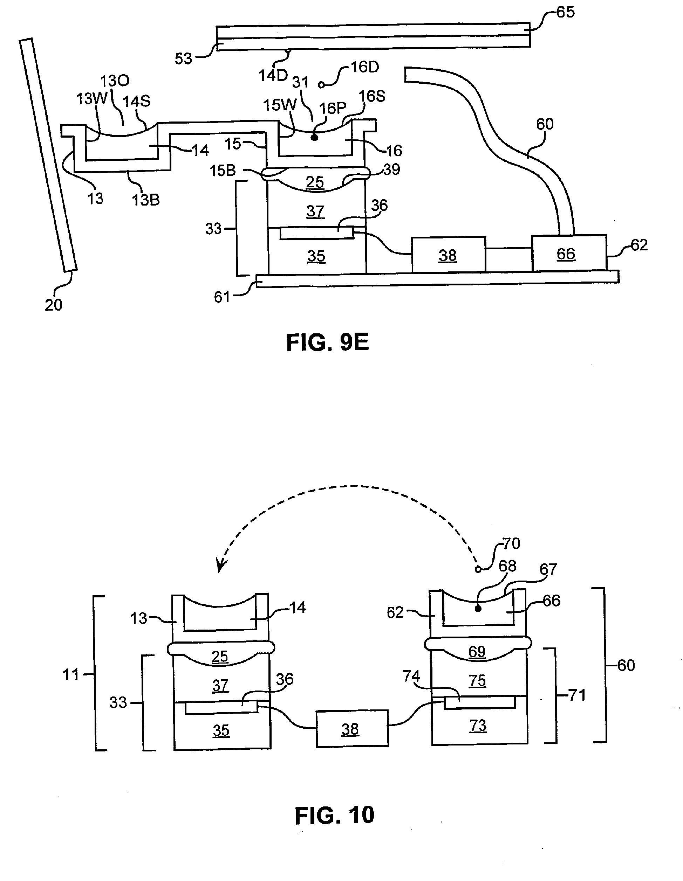

FIGS. 9A, 9B, 9C, 9D and 9E, collectively referred to as FIG. 9, schematically illustrate in simplified cross-sectional view a preferred embodiment of the inventive device that allows the acoustic assessment in reflective mode of the composition and/or volume of fluids in a plurality of reservoirs and the introduction of fluids into the reservoirs. As depicted, the device comprises first and second reservoirs, a combined acoustic analyzer/ejector, and a positioning means. FIG. 9A shows the acoustic analyzer/ejector acoustically coupled to the first reservoir engaged in the acoustic monitoring of the composition and/or volume of fluid within the reservoir. FIG. 9B illustrates the removal of a cover from the reservoirs and the activation of the analyzer ejector in order to eject a droplet of fluid from within the first reservoir toward a first designated site on a substrate surface to form an array. FIG. 9C shows the acoustic analyzer/ejector acoustically coupled to a second reservoir to monitor the composition and/or volume of fluid within the reservoir as a result. FIG. 9D illustrates the replenishment of evaporated fluid from the second reservoir. FIG. 9E illustrates the activation of the ejector in order to eject a droplet of fluid from within the second reservoir toward a second designated site on a substrate surface.

FIG. 10 schematically illustrates in simplified cross-sectional view an embodiment of the inventive device wherein an acoustic ejector is employed as a means for introducing additional fluid into the reservoir from which fluid may dispensed.

FIG. 11 graphically depicts the measured rate of fluid height change as plotted against the fluid height in a well of a 1536 unit well plate.

### MODES FOR CARRYING OUT THE INVENTION

Before describing the present invention in detail, it is to be understood that this invention is not limited to specific fluids, biomolecules, or device structures, as such may vary. It is also to be understood that the terminology used herein is for the purpose of describing particular embodiments only, and is not intended to be limiting.

It is noted that, as used in this specification and the appended claims, the singular forms "a," "an," and "the" include plural referents unless the context clearly dictates otherwise. Thus, for example, reference to "a reservoir" includes a single reservoir as well as a plurality of reservoirs, reference to "a fluid" includes a single fluid and a plurality of fluids, reference to "a biomolecule" includes a single biomolecule and a combination of biomolecules, reference to "an ejector" "includes a single ejector as well as plurality of ejectors, reference to "a characteristic" includes one or more characteristics, and the like.

In describing and claiming the present invention, the following terminology will be used in accordance with the definitions set forth below.

The terms "acoustic coupling" and "acoustically coupled" as used herein refer to a state wherein an object is placed in direct or indirect contact with another object so as to allow acoustic radiation to be transferred between the objects without unacceptable loss of acoustic energy. When two entities are indirectly acoustically coupled, an "acoustic coupling medium" is needed to provide an intermediary through which acoustic radiation may be transmitted. Thus, an ejector may be acoustically coupled to a fluid, such as by immersing the ejector in the fluid, or by interposing an acoustic coupling medium between the ejector and the fluid, in order to transfer acoustic radiation generated by the ejector through the acoustic coupling medium and into the fluid.

The terms "acoustic radiation" and "acoustic energy" are used interchangeably herein and refer to the emission and propagation of energy in the form of sound waves. As with other waveforms, acoustic radiation may be focused using a focusing means, as discussed below. Although acoustic radiation may have a single frequency and associated wavelength, acoustic radiation may take a form, e.g. a "linear chirp," that includes a plurality of frequencies. Thus, the term "characteristic wavelength" is used to describe the mean wavelength of acoustic radiation having a plurality of wavelengths.

The term "attached," as in, for example, a substrate surface having a moiety "attached" thereto, includes covalent and noncovalent binding, adsorption, and physical immobilization. The terms "binding" and "bound" are identical in meaning to the term "attached."

The term "array" as used herein refers to a two-dimensional arrangement of features, such as an arrangement of reservoirs (e.g., wells in a well plate) or an arrangement of different moieties, including ionic, metallic, covalent crystalline, molecular crystalline, composite, ceramic, glassine, amorphous, fluidic, or molecular materials, on a substrate surface (as in an oligonucleotide or peptidic array). Arrays are generally comprised of regular features ordered, as in, for example, a rectilinear grid, parallel stripes, spirals, and the like, but non-ordered arrays may be advantageously used as well. In particular, the term "rectilinear array" as used herein refers to an array that has rows and columns of features wherein the rows and columns typically, but not necessarily, intersect each other at a ninety-degree angle. An array is distinguished from the more general term "pattern" in that patterns do not necessarily contain regular and ordered features.

The terms "biomolecule" and "biological molecule" are used interchangeably herein to refer to any organic molecule that is, was, or can be a part of a living organism, regardless of whether the molecule is naturally occurring, recombinantly produced, or chemically synthesized in whole or in part. The terms encompass, for example, nucleotides, amino acids, and monosaccharides, as well as oligomeric and polymeric species, such as oligonucleotides and polynucleotides; peptidic molecules, such as oligopeptides, polypeptides, and proteins; saccharides, such as disaccharides, oligosaccharides, polysaccharides, and mucopolysaccharides or peptidoglycans (peptido-polysaccharides), and the like. The terms also encompass ribosomes, enzyme cofactors, pharmacologically active agents, and the like. Additional information relating to the term "biomolecule" can be found in U.S. Patent Application Publication No. 20020037579 to Ellson et al.

The term "fluid" as used herein refers to matter that is nonsolid, or at least partially gaseous and/or liquid, but not entirely gaseous. A fluid may contain a solid that is minimally, partially, or fully solvated, dispersed, or suspended. Examples of fluids include, without limitation, aqueous liquids (including water *per se* and salt water) and non-aqueous liquids such as organic solvents and the like. As used herein, the term "fluid" is not synonymous with the term "ink" in that an ink must contain a colorant and may not be gaseous.

The terms "focusing means" and "acoustic focusing means" refer to a means for causing acoustic waves to converge at a focal point, either by a device separate from the acoustic energy source that acts like an optical lens, or by the spatial arrangement of acoustic energy sources to effect convergence of acoustic energy at a focal point by constructive and destructive interference. A focusing means may be as simple as a solid member having a curved surface, or may include complex structures such as those found in Fresnel lenses, which employ diffraction in order to direct acoustic radiation. Suitable focusing means also include phased array methods as are known in the art and described, for example, in U.S. Patent No. 5,798,779 to Nakayasu et al. and Amemiya et al. (1997) Proceedings of the 1997 IS&T NIP13 International Conference on Digital Printing Technologies, pp. 698-702.

The term "image field" refers to a region interrogated by acoustic radiation from an acoustic radiation generator without relative movement between the generator and the region. For example, when an acoustic radiation generator is used to generate acoustic radiation that allows for the interrogation of an entire row of reservoirs at one time in a rectilinear reservoir array, the image field is comprised of the row of reservoirs under interrogation. The image field associated with an acoustic radiation generator is thus dependent on the particular generator used and the spatial relationship between the generator and the region. For example, acoustic radiation generators having electronic beam steering and/or focusing may be associated with a variable image field depending on the particular steering and/or focusing means employed. In contrast, a single nonadjustable focused acoustic transducer in fixed alignment with a region of an item is associated with an invariable image field.

The terms "library" and "combinatorial library" are used interchangeably herein to refer to a plurality of chemical or biological moieties arranged in a pattern or an array such that the moieties are individually addressable. In some instances, the plurality of chemical or biological moieties is present on the surface of a substrate, and in other instances, the plurality of moieties represents the contents of a plurality of reservoirs e.g., the composition and/or volume of a plurality of reservoirs. Preferably, but not necessarily, each moiety is different from each of the other moieties. The moieties may be, for example, peptidic molecules and/or oligonucleotides.

The term "moiety" refers to any particular composition of matter, e.g., a molecular fragment, an intact molecule (including a monomeric molecule, an oligomeric molecule, or a polymer), or a mixture of materials (for example, an alloy or a laminate).

"Optional" or "optionally" means that the subsequently described circumstance may or may not occur, so that the description includes instances where the circumstance occurs and instances where it does not.

The terms "pathogen" and "pathogenic" as used herein refer to any agent that is capable of causing disease and/or a toxic response in an individual. The individual may be a human, an animal (mammalian or otherwise), or on occasion, a plant. Typically, a pathogen referred to herein is a bacterium or virus, but it may also be an organic toxin such as strychnine or botulinum, or an inorganic toxin such as arsenic or sodium cyanide. Commonly, pathogens are biomolecular in nature. Thus, exemplary bacterial pathogens include, but are not limited to, bacteria of the following genera: Campylobactera, Bacteroides, Bordetella, Haemophilus, Pasteurella, Francisella, Actinobacillus, Klebisella, Moraxella, Pseudomonas, Pneumococci, Proteus, Ornithobacterium, Staphylococci, and Streptococci. Salmonella is another exemplary genus of pathogenic bacteria and includes species such as Salmonella typhimurium, Salmonella enteriditis, Salmonella gallinarum, Salmonella pullorum, Salmonella arizona, Salmonella heidelberg, Salmonella anatum, Salmonella hadar, Salmonella agana, Salmonella montevideo, Salmonella kentucky, Salmonella infantis, Salmonella schwarzengrund, Salmonella saintpaul, Salmonella brandenburg, Salmonella instanbul, Salmonella cubana, Salmonella bredeney, Salmonella braenderup, Salmonella livingstone, Salmonella berta, Salmonella california, Salmonella senfenberg, and Salmonella mbandaka. Mycobacterium is another genus of pathogenic bacteria that is particularly harmful to humans and includes species such as Mycobacterium tuberculosis, Mycobacterium avium, Mycobacterium paratuberculosis, Mycobacterium bovis, and Mycobacterium leprae.

Anaerobic bacterial pathogens include, for example, those in the genera Peptostreptococci, Actinomyces, Clostridium, Anaerobiospirillum, Fusobacterium, and Bilophila. Thus, exemplary anaerobic bacterial pathogens include: Peptostreptococci asaccharolyticus, Peptostreptococci magnus, Peptostreptococci micros, Peptostreptococci prevotii, Porphyromonas asaccharolytica, Porphyromonas canoris, Porphyromonas gingivalis, Porphyromonas macaccae, Actinomyces israelii, Actinomyces odontolyticus, Clostridium innocuum, Clostridium clostridioforme, Clostridium difficile, Bacteroides tectum, Bacteroides ureolyticus, Bacteroides gracilis (Campylobacter gracilis), Prevotella intermedia, Prevotella heparinolytica, Prevotella oris-buccae, Prevotella bivia, Prevotella melaninogenica, Fusobacterium naviforme, Fusobacterium necrophorum, Fusobacterium varium, Fusobacterium ulcerans, Fusobacterium russii, and Bilophila wadsworthia

Exemplary upper respiratory pathogenic bacteria include, for example, those in the genera Pseudomonas and Legionella. Thus exemplary upper respiratory upper respiratory pathogens include: Pseudomonas aeruginosa, Legionella dumoffii, Legionella longbeacheae, Legionella micdadei, Legionella oakridgensis, Legionella feelei, Legionella anisa, Legionella sainthelensi, Legionella bozemanii, Legionella gormanii, Legionella wadsworthii, and Legionella jordanis.

Nonbacterial pathogens include, but are not limited to, viruses, fungi, protozoa, worms, and prions. Exemplary viral pathogens include, generally, those of classes I-VI, and more specifically, hepatitis viruses types A-E, ebola viruses, human papilloma viruses, keratoconjunctivitis viruses, parvoviruses, erythroviruses, dependoviruses, echo viruses, enteroviruses, Epstein-Barr viruses, equine arteritis virus, equine coital exanthema virus, equine encephalosis virus, feline sarcoma viruses, hantaviruses, herpes viruses, human immunodeficiency viruses, human T-cell leukaemia viruses, influenza viruses types A-C, JC viruses, Kirsten sarcoma viruses, Lassa viruses, Machupo viruses, Marburg viruses, mastadenoviruses, measles virus, Mengo viruses, Moloney murine leukemia viruses, Newcastle Disease virus, orbiviruses, polio viruses, retroviruses, simian immunodeficiency viruses, smallpox viruses, Tamiami viruses, and tobacco mosaic viruses. Fungal pathogens include, for example, Pyrenophora tritici-repentis, Drechslera sorokiniana, Rhizoctonia cerealis, Fusarium graminearum, Fusarium culmorum, Microdochium nivale, Pseudocercosporella herpotrichoides, Pseudocercosporella herpotrichoides, Septoria nodorum, Septoria tritici, Cladosporium herbarum, Cercospora arachidicola, Helminthosporium sativum, Pyrenophora teres, and Pyrenophora tritici-repentis. It is noted that these pathogens are enumerated in no particular order and some overlap may occur. Other pathogens are known in the art and identified, for example, in Sherris Medical Microbiology: An Introduction to Infectious Diseases, 3rd Ed. (Appleton & Lange, Stamford, Connecticut, 1994).

Thus, the term "pathogen-containing fluid" refers to nonsolid matter that is completely or partially pathogenic in nature. Such a fluid, for example, may be comprised of liquid that contains a pathogen minimally, partially, or fully solvated, dispersed, or suspended therein. Examples of pathogen-containing fluids include, without limitation, a culturing medium containing bacterial or viral infectious agents.

Similarly, the term "nonpathogenic" refers to matter that is not pathogenic, i.e., any agent that is not likely to cause disease or a toxic response. Nonpathogenic particles include, without limitation, beneficial cellular matter such as lactobacilli, yeast, epidermal cells, beads, and the like. Nonpathogenic fluids include, for example, sterile saline, glucose solutions, and the like.

The term "radiation" is used in its ordinary sense and refers to emission and propagation of energy in the form of a waveform disturbance traveling through a medium such that energy is transferred from one particle of the medium to another without causing any permanent displacement of the medium itself. Thus, radiation may refer, for example, to electromagnetic waveforms as well as acoustic vibrations.

The term "reservoir" as used herein refers to a receptacle or chamber for containing a fluid. In some instances, a fluid contained in a reservoir necessarily will have a free surface, e.g., a surface that allows acoustic radiation to be reflected therefrom or a surface from which a droplet may be acoustically ejected. A reservoir may also be a locus on a substrate surface within which a fluid is constrained.

The term "substrate" as used herein refers to any material having a surface onto which one or more fluids may be deposited. The substrate may be constructed in any of a number of forms including, for example, wafers, slides, well plates, or membranes. In addition, the substrate may be porous or nonporous as required for deposition of a particular fluid. Suitable substrate materials include, but are not limited to, supports that are typically used for solid phase chemical synthesis, such as polymeric materials (e.g., polystyrene, polyvinyl acetate, polyvinyl chloride, polyvinyl pyrrolidone, polyacrylonitrile, polyacrylamide, polymethylmethacrylate, polytetrafluoroethylene, polyethylene, polypropylene, polyvinylidene fluoride, polycarbonate, and divinylbenzene styrene-based polymers), agarose (e.g., Sepharose®), dextran (e.g., Sephadex®), cellulosic polymers and other polysaccharides, silica and silica-based materials, glass (particularly controlled pore glass, or "CPG") and functionalized glasses, ceramics, such substrates treated with surface coatings, e.g., with microporous polymers (particularly cellulosic polymers such as nitrocellulose), microporous metallic compounds (particularly microporous aluminum), antibody-binding proteins (available from Pierce Chemical Co., Rockford, Illinois), bisphenol A polycarbonate, or the like. Additional information relating to the term "substrate" can be found in U.S. Patent Application Publication No. 200200377579 to Ellson et al.

The term "substantially" as in, for example, "substantially identical volume," refers to volumes that differ by no more than 10%, preferably no more than 5%, more preferably no more than 1%, and most preferably no more than 0.1%. Other uses of the term "substantially" involve analogous definitions.

The terms "transducer assembly" and "acoustic transducer assembly" are used interchangeably herein and refer to a collection of acoustic radiation generating elements, e.g., piezoelectric elements, which can be excited individually or in concert to produce acoustic radiation having a variety of beam characteristics such as shape, directionality, directivity, phase, and/or focusing. Typically, but not necessarily, the acoustic radiation generating elements of the transducer assembly are arranged in a closely spaced array.

In general, the invention relates to devices and methods for acoustically assessing and/or controlling the contents of a plurality of fluid reservoirs. When acoustic assessment is desired, the inventive device includes a plurality of reservoirs, each adapted to contain a fluid, and an acoustic radiation generator for generating acoustic radiation. The inventive device also includes a means for positioning the acoustic radiation generator in an acoustically coupled relationship to each reservoir such that the acoustic radiation generated by the acoustic radiation generator is transmitted through at least a portion of each reservoir. An analyzer for analyzing a characteristic of acoustic radiation is positioned to receive the transmitted acoustic radiation.

The device may be constructed to include the reservoirs as an integrated or permanently attached component of the device. However, to provide modularity and interchangeability of components, it is preferred that device be constructed with removable reservoirs. Generally, the reservoirs are arranged in a pattern or an array to provide each reservoir with individual systematic addressability. In addition, while each of the reservoirs may be provided as a discrete or stand-alone item, in circumstances that require a large number of reservoirs, it is preferred that the reservoirs are attached to each other or represent integrated portions of a single reservoir unit. For example, the reservoirs may represent individual wells in a well plate. Many well plates suitable for use with the device are commercially available and may contain, for example, 96, 384, 1536, or 3456 wells per well plate, having a full skirt, half skirt, or no skirt. The wells of such well plates typically form rectilinear arrays. Manufactures of suitable well plates for use in the employed device include Coming, Inc. (Corning, New York) and Greiner America, Inc. (Lake Mary, Florida). However, the availability of such commercially available well plates does not preclude the manufacture and use of custom-made well plates containing at least about 10,000 wells, or as many as 100,000 to 500,000 wells, or more. The wells of such custom-made well plates may form rectilinear or other types of arrays. As well plates have become commonly used laboratory items, the Society for Biomolecular Screening (Danbury, Connecticut) has formed the Microplate Standards Development Committee to recommend and maintain standards to facilitate the automated processing of small volume well plates on behalf of and for acceptance by the American National Standards Institute.

Furthermore, the material used in the construction of reservoirs must be compatible with the fluids contained therein. Thus, if it is intended that the reservoirs or wells contain an organic solvent such as acetonitrile, polymers that dissolve or swell in acetonitrile would be unsuitable for use in forming the reservoirs or well plates. Similarly, reservoirs or wells intended to contain DMSO must be compatible with DMSO. For water-based fluids, a number of materials are suitable for the construction of reservoirs and include, but are not limited to, ceramics such as silicon oxide and aluminum oxide, metals such as stainless steel and platinum, and polymers such as polyester and polytetrafluoroethylene. For fluids that are photosensitive, the reservoirs may be constructed from an optically opaque material that has sufficient acoustic transparency for substantially unimpaired functioning of the device.

In addition, to reduce the amount of movement and time needed to align the acoustic radiation generator with each reservoir or reservoir well during operation, discussed *infra,* it is preferable that the center of each reservoir be located not more than about 1 centimeter, more preferably not more than about 1.5 millimeters, still more preferably not more than about 1 millimeter and optimally not more than about 0.5 millimeter, from a neighboring reservoir center. These dimensions tend to limit the size of the reservoirs to a maximum volume. The reservoirs are constructed to contain typically no more than about 1 mL, preferably no more than about 1 µL, and optimally no more than about 1 nL, of fluid. To facilitate handling of multiple reservoirs, it is also preferred that the reservoirs be substantially acoustically indistinguishable.

When an array is provided, each reservoir may be individually, efficiently, and systematically addressed. Although any type of array may be employed, arrays comprised of parallel rows of evenly spaced reservoirs are preferred. Typically, though not necessarily, each row contains the same number of reservoirs. Optimally, rectilinear arrays comprising X rows and Y columns of reservoirs are employed with the invention, wherein X and Y are each at least 2. In some instances, X may be greater than, equal to, or less than Y. In addition, nonrectilinear arrays as well as other geometries may be employed. For example, hexagonal, spiral and other types of arrays may be used. In some instances, the invention may be employed to acoustically assess irregular patterns of reservoirs, e.g., droplets randomly located on a flat substrate surface such as those associated with a CD-ROM format. In addition, the invention may be used to perform acoustic assessment of reservoirs associated with microfluidic devices.

At a minimum, a single acoustic radiation generator is employed when acoustic assessment and/or monitoring of the contents of a reservoir is carried out. However, a plurality of acoustic radiation generators may be employed as well. All acoustic radiation generators employ a vibrational element or transducer to generate acoustic radiation. Often, a piezoelectric element is employed to convert electrical energy into mechanical energy associated with acoustic radiation. When a single acoustic radiation generator is employed with a plurality of reservoirs, the positioning means should allow for the acoustic radiation generator to move from one reservoir to another quickly and in a controlled manner, thereby allowing fast and controlled scanning of the contents of the reservoirs. In order to ensure optimal performance, it is important to keep in mind that there are two basic kinds of motion: pulse and continuous. Pulse motion involves the discrete steps of moving an acoustic radiation generator into position, keeping it stationary while it emits acoustic energy, and moving the generator to the next position; again, using a high performance positioning means allows repeatable and controlled acoustic coupling at each reservoir in less than 0.1 second. Typically, the pulse width is very short and may enable over 10 Hz reservoir transitions, and even over 1000 Hz reservoir transitions. A continuous motion design, on the other hand, moves the acoustic radiation generator and the reservoirs continuously, although not necessarily at the same speed.

In some instances, the analyzer is positioned or situated in fixed alignment with respect to the acoustic radiation generator. In addition, a means may be provided for altering the relative position of the analyzer with respect to the reservoirs. The relative position of the analyzer and the acoustic radiation generator depends on the particular configuration of the device. In some instances, the device may be configured to operate in transmissive mode, such that the generated radiation is transmitted through the entirety of the reservoir whose contents are assessed. In such a case, the reservoir may be interposed between the acoustic radiation generator and an acoustic analyzer.

More typically, however, the device may be configured to operate in a reflective mode, such that the acoustic radiation is transmitted only through a portion the reservoir whose contents are being assessed. When more than one reservoir is simultaneously interrogated in a reflective mode, acoustic radiation may be transmitted through the reservoirs under interrogation and reflected back toward the analyzer. Thus, the analyzer may be positioned in a manner appropriate for this configuration, e.g., in order to receive reflected acoustic radiation. In any case, the acoustic radiation generator should be positioned such that generated acoustic radiation is transmitted through the portion of each reservoir most likely to contain a fluid, for optimal performance. This reduces the chance that the analyzer will erroneously determine that a reservoir is empty. For example, as fluids ordinarily flow to the bottom of containers or are driven there by centrifugation, the acoustic radiation generator should be positioned such that generated acoustic radiation is transmitted through the bottom of a reservoir.

In a preferred configuration, as discussed in detail below, the analyzer is positioned to receive acoustic radiation reflected from a free surface of a fluid contained in each reservoir. Depending on the angle of reflection, the acoustic radiation generator and the analyzer may form an integrated unit. In such a configuration, the acoustic radiation generator may comprise a component common to the analyzer. The component common to the acoustic radiation generator and the analyzer may be a vibrational element that converts one form of energy into another, e.g., a piezoelectric element that converts acoustic/mechanical energy to electrical energy.

The analyzer may be constructed to perform a number of functions. For example, the analyzer may be adapted to analyze acoustic radiation to determine the volume of fluid in each reservoir. In addition, or in the alterative, the analyzer may be adapted to analyze acoustic radiation to determine a property of fluid in each reservoir. Other aspects of acoustic analysis are discussed *infra*.

As discussed above, the reservoirs may be constructed to reduce the amount of movement and time needed to align the acoustic radiation generator with each reservoir or reservoir well during operation. As a general matter of convenience and efficiency, it is desirable to analyze an entire library of different moieties in a relatively short amount of time, e.g., about one minute, or more preferably, about 10 seconds. Thus, the inventive method typically allows for the analysis of the contents of the reservoirs at a rate of at least about 96 reservoirs per minute. Faster analysis rates of at least about 384, 1536, and 3456 reservoirs per minute are achievable with present day technology as well. Thus, the invention can be operated to analyze the contents of each well of most (if not all) well plates that are currently commercially available. Proper implementation of the inventive method should yield a reservoir analysis rate of at least about 10,000 reservoirs per minute. Current commercially available positioning technology allows the acoustic radiation generator to be moved from one reservoir to another, with repeatable and controlled acoustic coupling at each reservoir, in less than about 0.1 second for high performance positioning means and in less than about 1 second for ordinary positioning means. A custom designed system will allow the acoustic radiation generator to be moved from one reservoir to another with repeatable and controlled acoustic coupling in less than about 0.001 second.

By analyzing acoustic radiation that has been transmitted through at least a portion of a selected reservoir, one may accurately determine the contents of the selected reservoir. For example, the assessment may involve determining the volume of fluid in the reservoir or determining a property of fluid in the reservoir. Fluid properties that may be determined include, but are not limited to, viscosity, surface tension, acoustic impedance, solid content, and impurity content. In some instances, the assessment may involve measuring the travel time of acoustic radiation through the reservoir. In addition, or in the alternative, the assessment may involve determining the difference of acoustic radiation before and after transmission through the reservoir. For temperature-dependent properties, a temperature measurement means known in art, such as thermocouples, may be used in conjunction with such analyses. Optionally, the results of acoustic analysis performed by the acoustic analyzer may be stored. Thus, the inventive device may include, for example, a storage means comprising rewritable and/or permanent data storage media for storing the results of acoustic analysis performed by the analyzer.

Acoustic assessment as described above may be employed to improve fluid dispensing from each of a plurality of reservoirs adapted to contain a fluid. Thus, another embodiment of the invention relates to a device for dispensing fluid from each of a plurality of reservoirs adapted to contain a fluid. This device may include any of a number of known techniques for dispensing fluids involving contact-based fluid dispensing, e.g., pin spotting, pipetting, and inkjet printing, or non-contact based fluid dispensing, e.g., acoustic ejection. However, the inventive device represents a novel and nonobvious improvement over the fluid dispensing devices known in the art since it provides for enhanced accuracy and precision in fluid dispensing through the use of a means for acoustically assessing the contents of the reservoirs. The means for acoustically assessing the contents of the reservoirs is similar to the previously described device for assessing the contents of a plurality of fluid reservoirs in that it also comprises an acoustic radiation generator for generating acoustic radiation and an analyzer for analyzing a characteristic of the acoustic radiation. A means for positioning the acoustic radiation generator in acoustic coupling relationship to each reservoir is used to ensure that acoustic radiation generated by the acoustic radiation generator is transmitted through at least a portion of each reservoir. Furthermore, the analyzer is positioned to receive the transmitted acoustic radiation.

Thus, in a preferred embodiment, the invention provides a device that employs an acoustic radiation generator for generating acoustic radiation having an image field of a size sufficient to interrogate one or more selected reservoirs of the plurality at one time. A means for positioning the acoustic radiation generator is provided so that the acoustic radiation generator is placed in acoustic coupling relationship to the selected reservoirs. As a result, acoustic radiation generated by the acoustic radiation generator is transmitted through an exterior surface of the plurality and the selected reservoirs. The device also includes an analyzer, which is situated in radiation receiving relationship to the acoustic radiation generator. The analyzer is adapted to analyze a characteristic of the transmitted acoustic radiation so as to assess the contents of each of the selected reservoirs.

The acoustic generator and the analyzer are used in combination to assess the contents of each of the selected reservoirs. Generally, any acoustic radiation generator may be employed as long as the effective beam size of the acoustic radiation generated is sufficient to interrogate a plurality of selected reservoirs at one time. All acoustic radiation generators employ one or more vibrational elements or transducers to generate acoustic radiation. Typically, piezoelectric technology is employed to convert electrical energy into mechanical energy associated with acoustic radiation. Acoustic radiation generated by a single-element transducer tends to result in the formation of a diverging beam. Accordingly, single-element acoustic generators may be employed in conjunction with a focusing means, as described below, to produce acoustic radiation having an image field of appropriate size and focus.

Multiple element acoustic radiation generators such as transducer assemblies are preferred for enhanced resolution and analytical performance. In general, transducer assemblies are comprised of a plurality of elements that can be excited individually or in groups to produce ultrasonic beams. Acoustic waves from the individual elements may reinforce each other in a desired direction and cancel each other out in undesired directions. In addition, transducer assemblies may be used to detect echo signals for analysis. In such a case, echo signals detected by individual elements may be amplified separately before being combined into one signal for each reflector from which an echo arises. Transducer assemblies are advantageous in that they may enable electronic beam steering, electronic focusing, and beam formation.

There are four general types of transducer assemblies. Linear acoustic arrays are formed from a side-by-side arrangement of piezoelectric elements, which are typically rectangular in shape and about 120 to 250 in number. One may produce individual acoustic radiation beams by activating a group of these elements to produce a pulse that travels along a beam line that is perpendicular to the face of the transducer assembly. As the face of a linear acoustic array is generally planar, a rectangular image field may be produced. Curvilinear acoustic arrays are of the same general construction except that their faces are bowed. As a result, curvilinear acoustic arrays tend to produce trapezoidal image fields. Annular acoustic arrays are formed from a concentric arrangement of elements that operates in a similar manner to the linear and curvilinear acoustic arrays. Phased acoustic arrays, like linear acoustic arrays, are formed by a side-by-side arrangement of piezoelectric elements and typically have about 128 separate elements. Phased acoustic array elements are, however, typically narrower than the elements of linear acoustic arrays. When all elements in the phased acoustic array are activated, individual acoustic pulses may be produced that travel along a beam line that can be electronically steered in different directions. Electronic steering is typically achieved using time-delay methods known in the art.

Of the above described transducer assemblies, the phased transducer assembly is most preferred. When used in conjunction with a rectilinear array of reservoirs, the phased transducer assembly preferably generates an image field of sufficient size to interrogate at least a row of reservoirs at one time. In some instances, the phased transducer assembly may simultaneously interrogate all reservoirs of a row. In other instances, electronic steering of the acoustic radiation generated by a transducer assembly serves to scan the reservoirs in the image field successively. When the image field is not sufficiently large to interrogate the entire reservoir array at one time, the means for positioning the acoustic radiation generator serves to provide relative motion between the acoustic radiation generator and the reservoir array such that acoustic radiation is transmitted through each reservoir of the reservoir array. Such relative motion preferably results in displacement of the acoustic radiation generator in a direction along the columns, and does not result in displacement of the radiation generator in a direction other than along the columns. Thus, for example, when the reservoirs are provided in a rectilinear array having X rows and Y columns of reservoirs, wherein X and Y are each at least 2, an acoustic radiation generator may be used to interrogate each row of reservoirs in succession in a direction along the Y columns.

When a multiple-element acoustic radiation generator is used in combination with an array of reservoirs, it is preferred that the elements exhibit geometric correspondence to the array. For example, when a well plate is used, it is preferred that the spacing between wells corresponds with the spacing of the vibrational elements. In such an instance, the elements of the acoustic generator may have the same spacing as the wells. To increase imaging resolution, the linear density of the elements may be a multiple, preferably a positive integer multiple, of the linear density of the reservoirs. Similarly, the elements may be sized according to the reservoirs. In some instances, a vibrational element may be of approximately the same size as a reservoir.

Similarly, it is preferred that the entire acoustic radiation generator be sized according to the reservoir array. For a typical well plate having a row length of about 72 mm, a phased acoustic array capable of generating an image field length of at least 72 mm may be used. To ensure that the phased acoustic array does not extend beyond the edges of the well plate, the phased acoustic array preferably has a length of less than about 85 mm. One such phased acoustic array having 84 elements on a 0.9 mm pitch and a normal operating frequency of 7.5MHz may be obtained from Toray Techno of Shinga-ken, Japan. Other acoustic radiation generators suitable for use with the invention are commercially available as well.

Thus, the invention also provides a method for acoustically assessing the contents of one or more reservoirs. The method involves providing a plurality of reservoirs, each reservoir adapted to contain a fluid, and positioning an acoustic radiation generator in acoustic coupling relationship to a selected reservoir. Once positioned, the acoustic radiation generator is actuated to generate acoustic radiation that is transmitted through at least a portion of the selected reservoir to an analyzer. The analyzer is then used to analyze acoustic radiation that has been transmitted through at least a portion of the selected reservoir, thereby assessing the contents of the selected reservoir. Optionally, the acoustic radiation generator may be repositioned to allow for the assessment of the contents of the remaining reservoirs as well. When the acoustic radiation generated has an image field of a size sufficient to interrogate a plurality of selected reservoirs at one time, the radiation is transmitted through an exterior surface of the selected reservoirs, and through the selected reservoirs.

The inventive method may be carried out by using only certain components of the device described above or by employing the entire device. For example, when a transducer assembly is used as the acoustic generator, the acoustic radiation may be generated using electronic beam steering and/or electronic focusing. In addition, transmissive and reflective acoustic techniques may be used to assess the contents of the reservoir. Furthermore, when a rectilinear array is employed comprising rows and columns of reservoirs, the image field of the generated acoustic radiation is typically of a size sufficient to interrogate at least a row of reservoirs. Thus, the inventive method may be used to assess the contents of each reservoir or a row of reservoirs. Optionally, such assessment may be repeated for a different row of reservoirs. By repeating such assessment successively for neighboring rows of reservoirs, the contents of all reservoirs of the reservoir array may be assessed.

By analyzing the transmitted acoustic radiation, one may accurately determine the contents of the selected reservoirs. As discussed above, the assessment may involve determining the volume of fluid in the reservoir or determining a property of the fluid in the reservoirs. The fluid properties that may be determined include, but are not limited to, viscosity, surface tension, acoustic impedance, density, solid content, impurity content, acoustic attenuation, and pathogen content. In some instances, the assessment may involve measuring the travel time of acoustic radiation through the reservoirs. In addition, or in the alternative, the assessment may involve determining differences in acoustic radiation characteristics before and after transmission through the reservoirs.

Those of ordinary skill in the art will appreciate that conventional or modified sonar techniques may be employed in the invention. For example, reflected acoustic radiation may be converted into electrical energy for analysis. The analysis may be used, for example, to reveal whether the reservoir contains any fluid at all. If fluid is present in the reservoir, the location and the orientation of the free fluid surface within the reservoir may be determined, as well as the overall volume of the fluid. Characteristics of the reflected acoustic radiation may be analyzed in order to assess, for example, the spatial relationship between the acoustic radiation generator and the fluid surface, or the spatial relationship between a solid surface of the reservoir and the fluid surface.

Characteristics of the reflected acoustic radiation may also be analyzed in order to determine a characteristic of the fluid in each reservoir, such as volume, viscosity, surface tension, acoustic impedance, acoustic attenuation, solid content, or impurity content. It should be noted that a fluid in a reservoir may be inhomogeneous and/or contain multiple phases of materials. For example, a fluid may entrain gaseous bubbles, emulsions of immiscible liquids, or suspended particulate matter. In such instances, acoustic radiation may be used to detect such inhomogeneities. Thus, it is evident that the fluid characteristic to be determined by the invention may, in some cases, be a fluid property. Once the analysis has been performed, a decision may be made as to whether and/or how to dispense fluid from the reservoir.

Depending on the type of assessment to be carried out, various techniques known in the art may be adapted for use in the present invention. Generally, interfacial energy measurements are routinely carried out using contact-angle measurements. The present invention may be adapted to perform such contact-angle measurements. In addition, a number of other acoustic assessment techniques are known in the art. For example, U.S. Patent No. 4,391,129 to Trinh describes a system for monitoring the physical characteristics of fluids. A physical characteristic may be determined from acoustic assessment of the interfacial tension of fluids to a high degree of accuracy. U.S. Patent No., 4,558,589 to Hemmes describes an ultrasonic blood-coagulation monitor. U.S. Patent No. 5,056,357 to Dymling et al. describes acoustic methods for measuring properties in fluids through Doppler shifts. Other acoustic assessment techniques that may be adapted for use in the present invention are described, for example, in U.S. Patent No. 4,901,245; U.S. Patent No. 5,255,564; U.S. Patent No. 5,410,518; U.S. Patent No. 5,471,872; U.S. Patent No. 5,533,402; U.S. Patent No. 5,594,165; U.S. Patent No. 5,623,095; U.S. Patent No. 5,739,432; U.S. Patent No. 5,767,407; U.S. Patent No. 5,793,705; U.S. Patent No. 5,804,698; U.S. Patent No. 6,119,510; U.S. Patent No. 6,227,040; and U.S. Patent No. 6,298,726.

In addition or in the alternative, the invention may employ directed and/or focused acoustic radiation to enhance reservoir content assessment. For example, acoustic radiation may be used to perturb the surface of a fluid as well as to monitor the perturbation. Such perturbation techniques are well suited for use in determining the surface tension and viscosity of fluids. Such techniques are generally sufficiently accurate and precise for measuring the effect that small amounts of additives (e.g., pharmaceutical compositions, biomolecular samples, etc.) have on the surface tension or viscosity of the fluids. Notably, such perturbation techniques should complement ordinary acoustic impedance measurements. Additional information relating to acoustic assessment can be found in U.S. Patent Application Publication No. 20030101819 to Mutz et al.

In some embodiments, the invention provides a method for monitoring a change in the amount and/or concentration of organisms in a culture fluid. That is, acoustic radiation is used to monitor changes in the amount and/or concentration of organisms in the reservoirs. For example, a bacterial culture may be placed in the reservoirs and subjected to a temperature change selected to facilitate an increase or decrease in the amount and/or concentration of the bacteria in the reservoirs. Acoustic radiation may be used to monitor bacterial growth in the reservoirs. Such monitoring techniques may also be applied to other biological or chemical systems, such as those constructed for PCR, wherein any moiety, e.g., a nucleotidic biomolecule, is replicated. It is noted, however, that the invention may be used to monitor the amount and/or concentration of any organism or moiety, irrespective of whether the organism is a pathogen.

As discussed above, the reservoirs may be constructed to reduce the amount of movement and time needed to align the acoustic radiation generator with each reservoir or reservoir well during operation. As a general matter of convenience and efficiency, it is desirable to analyze an entire library of different moieties in a relatively short amount of time, e.g., about one minute. Thus, when standardized well plates are employed, the inventive method typically allows for the analysis of the contents of the reservoirs at a rate of at least about 96 reservoirs per minute. Faster analysis rates of at least about 384, 1536, and 3456 reservoirs per minute are achievable with present day technology as well. Thus, the invention can be operated to analyze the contents of each well of most (if not all) well plates that are currently commercially available. Generally, it is desirable to carry out acoustic assessment of the reservoirs at a rate of at least about 5 reservoirs per second. Preferably, the assessment is carried out at a rate of at least about 10 reservoirs per second. More preferably, the assessment is carried out at a rate of at least about 25 reservoirs per second. It is envisioned that optimal implementation of the inventive method should yield a reservoir assessment rate of at least about 10,000 reservoirs per minute. Thus, depending on the assessment rate and the number of reservoirs, the contents of all reservoirs may be assessed in no more than 5 minutes, preferably in one minute or less.

Acoustic assessment as described above may be employed to improve fluid dispensing from each of a plurality of reservoirs adapted to contain a fluid. Thus, the invention may be used in conjunction with a number of known techniques for dispensing fluids involving contact-based fluid dispensing, e.g., pin spotting, pipetting, and inkjet printing or non-contact based fluid dispensing, e.g., acoustic ejection. Since acoustic ejection provides a number of advantages over other fluid dispensing technologies, the device may also include an ejector and a means for positioning the ejector to eject fluid from any of the reservoirs. Typically, the acoustic ejector employs focused acoustic radiation to effect fluid ejection, and the means for positioning the ejector is adapted to position the ejector in acoustic coupling relationship to each of the reservoirs. As described in U.S. Patent Application Publication No. 20020037579 to Ellson et al., an acoustic ejector may comprise an acoustic radiation generator for generating acoustic radiation and a focusing means for focusing the acoustic radiation generated at a focal point within and sufficiently near the fluid surface in each of a plurality of reservoirs to result in the ejection of droplets therefrom. Thus, the invention also provides a device that can carry out both acoustic ejection and assessment.

In the present invention, any of a variety of focusing means may be employed to focus acoustic radiation so as to eject droplets from a reservoir. For example, one or more curved surfaces may be used to direct acoustic radiation to a focal point near a fluid surface. Focusing means with a curved surface have been incorporated into the construction of commercially available acoustic transducers such as those manufactured by Panametrics Inc. (Waltham, Massachusetts). In addition, Fresnel lenses are known in the art for directing acoustic energy at a predetermined focal distance from an object plane. See, *e.g*., U.S. Patent No. 5,041,849 to Quate et al. Fresnel lenses may have a radial phase profile that diffracts a substantial portion of acoustic energy into a predetermined diffraction order at diffraction angles that vary radially with respect to the lens. The diffraction angles are preferably selected to focus the acoustic energy within the diffraction order on a desired object plane.

A single ejector is preferred, although the inventive device may include a plurality of ejectors. When a single ejector is employed, the positioning means should allow for the ejector to move from one reservoir to another quickly and in a controlled manner, thereby allowing fast and controlled scanning of the reservoirs to effect droplet ejection therefrom. In some instances, the same acoustic radiation generator may be used to effect both acoustic assessment and ejection. Acoustic assessment and ejection may also be carried out using separate acoustic generators.

Optimally, the device is adapted to eject fluid from a reservoir according to the results of acoustic analysis performed by the analyzer. The means for positioning the ejector may be adapted to provide relative motion between the ejector and reservoirs based on the reservoir content assessment made by the analyzer. In such a case, the ejector may be maintained at a constant distance from the acoustic radiation generator. Accordingly, when rows of reservoirs are provided, relative motion between the acoustic radiation generator and the reservoirs may result in displacement of the acoustic radiation generator in a direction along the rows. Alternatively, the means for positioning the ejector is adapted to provide relative motion between the ejector and the reservoir array independently from the reservoir content assessment made by the analyzer. In any case, when a rectilinear array of reservoirs is provided, the ejector may be movable in a row-wise direction and/or in a direction perpendicular to both the rows and columns

When an ejector is employed, the invention may be used to eject fluid from the reservoirs onto a substrate. For example, it is described in U.S. Patent Application Publication No. 20020037579 to Ellson et al. that such acoustic ejection technology may be used to form biomolecular arrays. Similarly, acoustic ejection technology may be employed to format a plurality of fluids, e.g., to transfer fluids from odd-sized bulk containers to wells of a standardized well plate or to transfer fluids from one well plate to another. One skilled in the art will recognize that such acoustic ejection technologies may be adapted for a variety of applications. In such applications, a means for positioning the substrate may be employed to provide relative motion between the substrate and the reservoirs.

As discussed above, relative motion may be classified as pulsed or continuous. Either type of design may be employed for providing relative motion between the ejector and the reservoirs for fluid ejection. Similarly, either type of motion may result in relative displacement between the acoustic generator and the reservoirs, as well as relative displacement between the substrate and the reservoirs. Thus, the above-described positioning technology for the acoustic generator may be used to move a separate acoustic analyzer and/or acoustic ejector.

In some instances, high-speed robotic systems may be employed to handle the reservoirs, the acoustic generator, and/or the ejector. In some instances, a decision may be made as to whether and/or how to dispense fluid from the reservoir depending on the results of acoustic analysis. For example, when an acoustic ejector is employed, operating parameters relating to the ejector may be determined by using the data from the above-described assessment relating to reservoir volume or fluid property data, as well as geometric data associated with the reservoir. In addition, the data may show the need to reposition the acoustic radiation generator with respect to the fluid surface, in order to ensure that the focal point of the ejection acoustic wave is near the fluid surface, where desired. For example, if analysis reveals that the acoustic radiation generator is positioned such that the ejection acoustic wave cannot be focused near the fluid surface, the acoustic radiation generator is repositioned using vertical, horizontal, and/or rotational movement to allow appropriate focusing of the ejection acoustic wave.

In some embodiments, the inventive device also includes a means for removing fluid acoustic coupling medium from the exterior surface of one or more reservoirs where the acoustic radiation generator is not acoustically coupled thereto. Typically, such means employs vacuum technology. For example, suction may be applied to either pull the coupling medium into a collection vessel or to accelerate evaporation of the coupling medium. In addition or in the alternative, the means for removing the fluid acoustic coupling medium employs a blade that conforms to the exterior surface of one or more reservoirs. Such a blade may be comprised of an elastomeric material and generally operates on the same principle employed when a windshield wiper or a squeegee is slid across a surface to remove water therefrom. Furthermore, the coupling medium may be removed through the use of an absorbent material through wiping or blotting action. One skilled in the art will recognize that other fluid removal technologies may be used in conjunction with the invention as well. Optionally, when a plurality of reservoirs is employed, fluid coupling medium removal may be simultaneously carried out with acoustic assessment, as long as the removal of acoustic coupling does not interfere with acoustic assessment. That is, as long as sufficient acoustic coupling medium is present for assessment, any excess acoustic coupling fluid present on a surface may be removed simultaneously with acoustic assessment occurring elsewhere.

It should be noted that acoustic coupling medium removal represents an important aspect of the invention because the acoustic coupling medium may represent a source of contamination. For example, DMSO, as discussed above, is highly hygroscopic and tends to absorb and become diluted by any ambient water with which it comes into contact. Should water or an aqueous fluid be used as the acoustic coupling medium when one or more reservoirs contain DMSO, it is desirable to limit the exposure of reservoirs to the acoustic coupling medium. Thus, in most instances, the acoustic coupling medium should be removed soon after it is needed. In particular, when high-speed handling systems are employed, any fluid coupling medium remaining on the exterior surface of the reservoirs may experience the forces associated with large accelerations and decelerations. As a result, such remaining fluid coupling medium may be uncontrollably flung from the surface. If the fluid coupling medium lands in a reservoir, the contents of the reservoir will be changed.

The invention may employ or provide certain additional performance-enhancing functionalities. Thus, the invention may employ a storage means comprising rewritable and/or permanent data storage media for storing the results of acoustic analysis performed by the analyzer. Such data may be used immediately, e.g., to enhance fluid ejection, and/or stored for future use. In some instances, the invention may be used to determine the location and/or geometries associated with one or more reservoirs within a reservoir unit.

In addition, for fluids that exhibit temperature-dependent properties, a temperature measurement means known in the art, such as thermocouples, may be used in conjunction with such analyses. Temperature controlling means may be also employed to improve the accuracy of measurement and may be employed regardless of whether the device includes a fluid dispensing functionality. In the case of aqueous fluids, the temperature controlling means should have the capacity to maintain the reservoirs at a temperature above about 0 °C. In addition, the temperature controlling means may be adapted to lower the temperature in the reservoirs. Such temperature lowering may be required because repeated application of acoustic energy to a reservoir of fluid may result in heating of the fluid. Such heating can result in unwanted changes in fluid properties such as viscosity, surface tension, and density. Design and construction of such temperature controlling means are known to one of ordinary skill in the art and may comprise, e.g., components such a heating element, a cooling element, or a combination thereof.

For many biomolecular applications, reservoirs of fluids are stored frozen and thawed for use. During use, it is generally desired that the fluid containing the biomolecule be kept at a constant temperature, with deviations of no more than about 1 °C or 2 °C therefrom. In addition, for a biomolecular fluid that is particularly heat sensitive, it is preferred that the fluid be kept at a temperature that does not exceed about 10°C above the melting point of the fluid, preferably at a temperature that does not exceed about 5 °C above the melting point of the fluid. Thus, for example, when the biomolecule-containing fluid is aqueous, it may be optimal to keep the fluid at about 4 °C during ejection.

Moreover, the invention may be adapted to assess and/or dispense fluids of virtually any type and amount desired. The fluid may be aqueous and/or non-aqueous. Examples of fluids include, but are not limited to, aqueous fluids including water *per se* and water-solvated ionic and non-ionic solutions, organic solvents, lipidic liquids, suspensions of immiscible fluids, and suspensions or slurries of solids in liquids. Because the invention is readily adapted for use at high temperatures, fluids such as liquid metals, ceramic materials, and glasses may be used; see, e.g., U.S. Patent Application Publication Nos. 2002007375 and 2002155231 to Ellson et al. Furthermore, because of the precision that is possible using the inventive technology, the invention may be used to eject droplets from a reservoir adapted to contain no more than about 100 nL of fluid, preferably no more than 10 nL of fluid. In certain cases, the ejector may be adapted to eject a droplet from a reservoir adapted to contain about 1 nL of fluid. This is particularly useful when the fluid to be ejected contains rare or expensive biomolecules, wherein it may be desirable to eject droplets having a volume of about 1 picoliter or less, e.g., having a volume in the range of about 0.025 pL to about 1 pL.

It should be noted that there are a number of different ways to combine acoustic assessment with fluid dispensing, depending on the intended purpose of the combination. As discussed above, fluid may be dispensed from a reservoir after the contents of the reservoir are acoustically assessed. This allows an operator to fine tune the dispensing according to the condition of the contents of the reservoir. Alternatively, fluid may be dispensed from a reservoir before the contents of the reservoir are acoustically assessed. In such a case, acoustic assessment may serve to confirm the quality of fluid dispensation as well as to ensure that the dispensing process does not unexpectedly alter the contents of the reservoir. For example, by assessing the volume of fluid remaining in a reservoir after a fluid has been dispensed from the reservoir, an operator may determine the quantity of fluid actually removed from the reservoir. In some instances, acoustic assessment and fluid dispensation may occur simultaneously.

Thus, another embodiment of the invention relates to a method for dispensing fluid from one or more reservoirs. Once an acoustic radiation generator is positioned in acoustic coupling relation to a reservoir selected from a plurality of reservoirs, acoustic radiation generated by the acoustic radiation generator may be transmitted through at least a portion of the selected reservoir. The acoustic radiation is then analyzed in order to assess the contents of the reservoir, and fluid is dispensed from the selected reservoir according to the assessment. Typically, the fluid is dispensed through acoustic ejection, though the inventive method may employ contact-based fluid dispensing either as an alternative to or as a supplement to non-contact-based fluid dispensing. Optionally, the above process may be repeated for additional reservoirs.

FIG. 1 illustrates, in simplified cross-sectional view, a device for acoustically assessing the contents of a plurality of reservoirs and acoustically ejecting fluid droplets from the reservoirs. The device is shown operating to form a biomolecular array bound to a substrate. As with all figures referenced herein, in which like parts are referenced by like numerals, FIG. 1 is not to scale, and certain dimensions may be exaggerated for clarity of presentation. The device 11 includes a plurality of reservoirs, i.e., at least two reservoirs, with a first reservoir indicated at 13 and a second reservoir indicated at 15. Each is adapted to contain a fluid having a fluid surface. As shown, the first reservoir 13 contains a first fluid 14 and the second reservoir 15 contains a second fluid 16. Fluids 14 and 16 each have a fluid surface, respectively indicated at 14S and 16S. Fluids 14 and 16 may be the same or different. As shown, the reservoirs are of substantially identical construction so as to be substantially acoustically indistinguishable, but identical construction is not a requirement. The reservoirs are shown as separate removable components but may, as discussed above, be fixed within a plate or other substrate. For example, the plurality of reservoirs may comprise individual wells in a well plate, optimally although not necessarily arranged in an array. Each of the reservoirs 13 and 15 is preferably axially symmetric as shown, having vertical walls 13W and 15W extending upward from circular reservoir bases 13B and 15B and terminating at openings 130 and 150, respectively, although other reservoir shapes may be used. The material and thickness of each reservoir base should be such that acoustic radiation may be transmitted therethrough and into the fluid contained within the reservoirs.

The device also includes an acoustic ejector **33** comprised of an acoustic radiation generator **35** for generating acoustic radiation and a focusing means **37** for focusing the acoustic radiation at a focal point within the fluid, near the fluid surface, from which a droplet is to be ejected. The acoustic radiation generator contains a transducer **36,** e.g., a piezoelectric element, commonly shared by an analyzer. As shown, a combination unit **38** is provided that both serves as a controller and a component of an analyzer. Operating as a controller, the combination unit **38** provides the piezoelectric element **36** with electrical energy that is converted into mechanical and acoustic energy. Operating as a component of an analyzer, the combination unit receives and analyzes electrical signals from the transducer. The electrical signals are produced as a result of the absorption and conversion of mechanical and acoustic energy by the transducer.

As shown in FIG. 1, the focusing means **37** may comprise a single solid piece having a concave surface **39** for focusing acoustic radiation, but the focusing means may be constructed in other ways as discussed above. The acoustic ejector **33** is thus adapted to generate and focus acoustic radiation so as to eject a droplet of fluid from each of the fluid surfaces **17** and **19** when acoustically coupled to reservoirs **13** and **15,** and thus to fluids **14** and **16,** respectively. The acoustic radiation generator **35** and the focusing means **37** may function as a single unit controlled by a single controller, or they may be independently controlled, depending on the desired performance of the device. Typically, single ejector designs are preferred over multiple ejector designs because accuracy of droplet placement and consistency in droplet size and velocity are more easily achieved with a single ejector.

There are a number of ways to acoustically couple the ejector **33** to each individual reservoir and thus to the fluid therein. One such approach is through direct contact, by submerging a focusing means constructed from a hemispherical crystal having segmented electrodes in a liquid to be ejected. This method of acoustically coupling the focusing means to a fluid is, however, undesirable when the ejector is used to eject different fluids in a plurality of containers or reservoirs, as repeated cleaning of the focusing means would be required in order to avoid cross-contamination. The cleaning process would necessarily lengthen the transition time between each droplet ejection event. In addition, in such a method, fluid would adhere to the ejector as it is removed from each container, wasting material that may be costly or rare.

Thus, the approach according to the claimed invention is to acoustically couple the ejector to the reservoirs and reservoir fluids without contacting any portion of the ejector, e.g., the focusing means, with any of the fluids to be ejected. To this end, the present invention provides an ejector positioning means for positioning the ejector in controlled and repeatable acoustic coupling with each of the fluids in the reservoirs to eject droplets therefrom without submerging the ejector therein. This typically involves direct or indirect contact between the ejector and the external surface of each reservoir. When direct contact is used in order to acoustically couple the ejector to each reservoir, it is preferred that the direct contact is wholly conformal to ensure efficient acoustic energy transfer. That is, the ejector and the reservoir should have corresponding surfaces adapted for mating contact. Thus, if acoustic coupling is achieved between the ejector and reservoir through the focusing means, it is desirable for the reservoir to have an outside surface that corresponds to the surface profile of the focusing means. Without conformal contact, efficiency and accuracy of acoustic energy transfer may be compromised. In addition, since many focusing means have a curved surface, the direct contact approach may necessitate the use of reservoirs having a specially formed inverse surface.

Optimally, acoustic coupling is achieved between the ejector and each of the reservoirs through indirect contact, as illustrated in FIG. 1A. In this figure, an acoustic coupling medium **25** is placed between the ejector **33** and the base **13B** of reservoir **13,** with the ejector and reservoir located at a predetermined distance from each other. The acoustic coupling medium may be an acoustic coupling fluid, preferably an acoustically homogeneous material in conformal contact with both the acoustic focusing means **37** and each reservoir. In addition, it is important to ensure that the fluid medium is substantially free of material having different acoustic properties than the fluid medium itself. Furthermore, it is preferred that the acoustic coupling medium is comprised of a material having acoustic properties that facilitate the transmission of acoustic radiation without significant attenuation in acoustic pressure and intensity. Also, the acoustic impedance of the coupling medium should facilitate the transfer of energy from the coupling medium into the container. As shown, the first reservoir **13** is acoustically coupled to the acoustic focusing means **37,** such that an acoustic wave is generated by the acoustic radiation generator and directed by the focusing means **37** into the acoustic coupling medium **25,** which then transmits the acoustic radiation into the reservoir **13.**

In operation, reservoirs **13** and **15** are each filled with first and second fluids **14** and **16,** respectively, as shown in FIG. **1****.** The acoustic ejector **33** is positionable by means of ejector positioning means **61,** shown below reservoir **13,** in order to achieve acoustic coupling between the ejector and the reservoir through acoustic coupling medium **25.** Once the ejector, the reservoir, and the substrate are in proper alignment, the acoustic radiation generator **35** is activated to produce acoustic radiation that is directed toward a free fluid surface **14S** of the first reservoir. The acoustic radiation will then travel in a generally upward direction toward the free fluid surface **14S.** The acoustic radiation will be reflected under different circumstances. Typically, reflection will occur when there is a change in the acoustic property of the medium through which the acoustic radiation is transmitted. It has been observed that a portion of the acoustic radiation traveling upward will be reflected from by the reservoir bases **13B** and **15B** as well as from the free surfaces **14S** and **16S** of the fluids contained in the reservoirs **13** and **15.**

As discussed above, acoustic radiation may be employed for use as an analytical tool as well as to eject droplets from a reservoir. In an analytical mode, the acoustic radiation generator is typically activated so as to generate low energy acoustic radiation that is insufficiently energetic to eject a droplet from the fluid surface. This is typically done by using an extremely short pulse (on the order of tens of nanoseconds) relative to that required for droplet ejection (on the order of microseconds). By determining the time it takes for the acoustic radiation to be reflected by the fluid surface back to the acoustic radiation generator, and then correlating that time with the speed of sound in the fluid, the distance-and thus the fluid height-may be calculated. Of course, care must be taken in order to ensure that acoustic radiation reflected by the interface between the reservoir base and the fluid is accounted for and discounted so that acoustic assessment is based on the travel time of the acoustic radiation within the fluid only.

Thus, the present invention represents a significant improvement over known technologies relating to the acoustic assessment of the contents of a plurality of reservoirs. As discussed above, acoustic assessment of the liquid contents of reservoirs typically involves placing a sensor in direct contact with the liquid. This means that the sensor must be cleaned between each use to avoid cross-contamination of the contents of the reservoirs. In contrast, the invention allows for assessment of the contents of a plurality of containers without direct contact with the contents of the containers.

While other non-contact acoustic systems are known in the art, such systems provide only an indirect and approximate assessment of the contents of a reservoir. For example, the acoustic system described in U.S. Patent No. 5,880,364 to Dam employs a technique in which the acoustic radiation is transmitted from a sensor through an air-containing portion of the container and then reflected from the air-liquid interface of the container back to the sensor. The roundtrip transit time is used to determine the volume of the air-containing portion of the container. The volume of liquid in the container is determined by subtracting the volume of the container not occupied by the liquid from the volume of the entire container. One drawback of this technique is that it cannot provide an accurate assessment of the liquid volume in a container when the volume of the container is not precisely known. This is particularly problematic when small reservoirs such as those typically used in combinatorial techniques are employed. The dimensional variability for such containers is relatively large when considered in view of the small volume of the reservoirs. Furthermore, the technique cannot be employed when the volume of the container is completely unknown or alterable. Finally, since acoustic radiation never penetrates the liquid, the reflected radiation can at best only provide information relating to the surface of the liquid, not information relating to the bulk of the liquid.

In contrast, because the present invention involves the transmission of acoustic radiation through the portion of each reservoir adapted to contain a fluid, the transmitted acoustic radiation may provide information relating to the volume as well as the properties of the fluids in the reservoir. For example, the invention provides for a plurality of reservoirs, wherein a portion of each reservoir is adapted to contain a fluid. A fluid contained in a reservoir must ordinarily contact a solid surface of the reservoir. When the invention is employed in a reflective mode, some of the generated acoustic radiation may be reflected by the interface between the fluid and the solid surface, while the remainder is transmitted through a fluid contained in the reservoir. The transmitted radiation is then reflected by another surface, e.g., a free surface, of the fluid contained in the reservoir. By determining the difference in roundtrip transit time between the two portions, the volume of the fluid in the reservoir may be accurately determined. In addition, transmission of acoustic radiation through the fluid allows characteristics of the acoustic radiation to be altered by the fluid. Thus, information relating to a property of the fluid may be deduced by analyzing a characteristic of the transmitted acoustic radiation.

In addition, air, like other gases, exhibits low acoustic impedance, and acoustic radiation tends to attenuate more in gaseous materials than in liquid or solid materials. For example, the attenuation at 1 MHz for air is approximately 10 dB/cm while that of water is 0.002 dB/cm. Since the acoustic system described in U.S. Patent No. 5,880,364 to Dam requires acoustic radiation to travel through air, this system requires much more energy to operate. Thus, the present invention represents a more energy efficient technology that may be employed to provide more accurate and detailed assessment of the contents of a plurality of fluid reservoirs. Some of this additional accuracy can be achieved by using higher frequency acoustic waves (and hence shorter wavelengths), as these acoustic waves can be transmitted effectively through liquids yet would be very rapidly attenuated in air.

In order to form a biomolecular array on a substrate using the inventive device, substrate 53 is positioned above and in proximity to the first reservoir **13** such that one surface of the substrate, shown in FIG. 1 as underside surface **S1;** faces the reservoir and is substantially parallel to the surface **14S** of the fluid **14** therein. Once the ejector, the reservoir, and the substrate are in proper alignment, the acoustic radiation generator **35** is activated to produce acoustic radiation that is directed by the focusing means **37** to a focal point **14P** near the fluid surface **14S** of the first reservoir. That is, an ejection acoustic wave having a focal point near the fluid surface is generated in order to eject at least one droplet of the fluid.

The optimum intensity and directionality of the ejection acoustic wave is determined using the aforementioned analysis, optionally in combination with additional data. That is, any of the conventional or modified sonar techniques discussed above may be employed. The "optimum" intensity and directionality are generally selected to produce droplets of consistent size and velocity. For example, the desired intensity and directionality of the ejection acoustic wave may be determined by using the data from the above-described assessment relating to reservoir volume or fluid property data, as well as geometric data associated with the reservoir. In addition, the data may show the need to reposition the acoustic radiation generator with respect to the fluid surface, in order to ensure that the focal point of the ejection acoustic wave is near the fluid surface, where desired. For example, if analysis reveals that the acoustic radiation generator is positioned such that the ejection acoustic wave cannot be focused near the fluid surface, the acoustic radiation generator is repositioned using vertical, horizontal, and/or rotational movement to allow appropriate focusing of the ejection acoustic wave.

As a result, droplet **14D** is ejected from the fluid surface **14S** onto a designated site on the underside surface **51** of the substrate. The ejected droplet may be retained on the substrate surface by solidifying thereon after contact; in such an embodiment, it may be necessary to maintain the substrate at a low temperature, i.e., a temperature that results in droplet solidification after contact. Alternatively, or in addition, a molecular moiety within the droplet attaches to the substrate surface after contract, through adsorption, physical immobilization, or covalent binding.

Then, as shown in FIG. 1B, a substrate positioning means **65** repositions the substrate **53** over reservoir **15** in order to receive a droplet therefrom at a second designated site. FIG. 1B also shows that the ejector **33** has been repositioned by the ejector positioning means **61** below reservoir **15** and in acoustically coupled relationship thereto by virtue of acoustic coupling medium **25.** Once properly aligned, the acoustic radiation generator **35** of ejector **33** is activated to produce low energy acoustic radiation to assess the contents of the reservoir 15 and to determine whether and/or how to eject fluid from the reservoir. Historical droplet ejection data associated with the ejection sequence may be employed as well. Again, there may be a need to reposition the acoustic radiation generator with respect to the fluid surface, in order to ensure that the focal point of the ejection acoustic wave is near the fluid surface, where desired. Should the results of the assessment indicate that fluid may be dispensed from the reservoir, focusing means **37** is employed to direct higher energy acoustic radiation to a focal point **16P** within fluid **16** near the fluid surface **16S,** thereby ejecting droplet **16D** onto the substrate **53.**

Accordingly, the invention relates to the assessment of the contents of a plurality of reservoirs as well as to dispensing a plurality of fluids from reservoirs, e.g., in order to form a pattern or an array, on the substrate surface **51.** However, there are a number of different ways in which content assessment and fluid dispensing may relate to each other. That is, a number of different sequences may be employed for assessing the contents of the reservoirs and for dispensing fluids therefrom. In some instances, the contents of a plurality of reservoirs may be assessed before fluid is dispensed from any of the reservoirs. In other instances, the contents of each reservoir may be assessed immediately before fluid is dispensed therefrom. The sequence used typically depends on the particular fluid-dispensing technique employed as well as the intended purpose of the sequence.

Furthermore, it will be appreciated that various components of the device may require individual control or synchronization. For example, the ejector positioning means may be adapted to eject droplets from each reservoir in a predetermined sequence associated with an array to be prepared on a substrate surface. Similarly, the substrate positioning means for positioning the substrate surface with respect to the ejector may be adapted to position the substrate surface to receive droplets in a pattern or array thereon. Any positioning means described herein (e.g., the ejector positioning means and the substrate positioning means) may be constructed from, for example, motors, levers, pulleys, gears, a combination thereof, or other electromechanical or mechanical means known to one of ordinary skill in the art. It is preferable to ensure that there is a correspondence between the movement of the substrate, the movement of the ejector, and the activation of the ejector to ensure proper array formation.

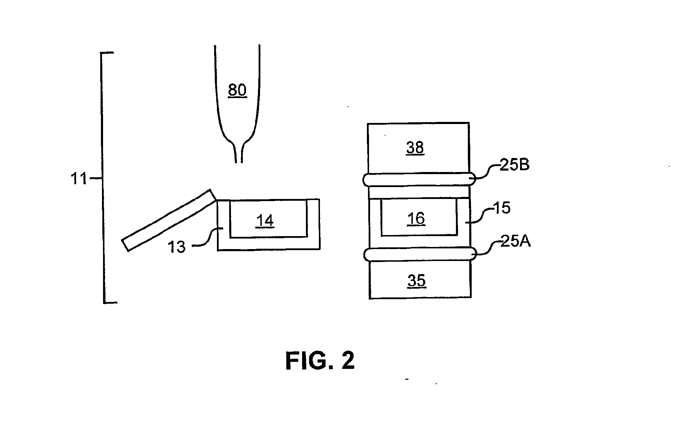

FIG. 2 illustrates an example of the device that provides for assessment of the contents of a plurality of reservoirs in transmissive mode rather than in reflective mode. Considerations for the design and construction of this device are similar to those discussed above. Thus, the device **11** includes a first reservoir **13** and a second reservoir **15,** each adapted to contain a fluid indicated at **14** and 16, respectively, and each of substantially identical construction. The first reservoir **13** is depicted in an open state, while the second reservoir is depicted in a sealed state. An acoustic radiation generator **35** is positioned below the reservoirs, and analyzer **38** is positioned in opposing relationship with the acoustic radiation generator **35** above the reservoirs.

In operation, the contents of each of the reservoirs are acoustically evaluated before pipette **80** is employed to dispense fluid therefrom. As shown, the contents **14** of the first reservoir **13** have already been acoustically assessed. As the assessment has revealed that the first reservoir **13** contains at least a minimum acceptable level of fluid **14,** the first reservoir **13** is open and ready for fluid to be dispensed therefrom via pipette **80.** The contents **16** of the second reservoir **15** are undergoing acoustic assessment, as depicted by FIG 2, as the second reservoir **15** is interposed between the acoustic radiation generator **35** and the analyzer **38,** The acoustic radiation generator **35** and the analyzer **38** are acoustically coupled to the second reservoir via coupling media **25A** and **25B,** respectively. Once the acoustic radiation generator **35,** the second reservoir **15,** and the analyzer 38 are in proper alignment, the acoustic radiation generator **35** is activated to produce acoustic radiation that is transmitted through the reservoir **15** and its contents **16** toward the analyzer **38.** The received acoustic radiation is analyzed by an analyzer **38** as described above

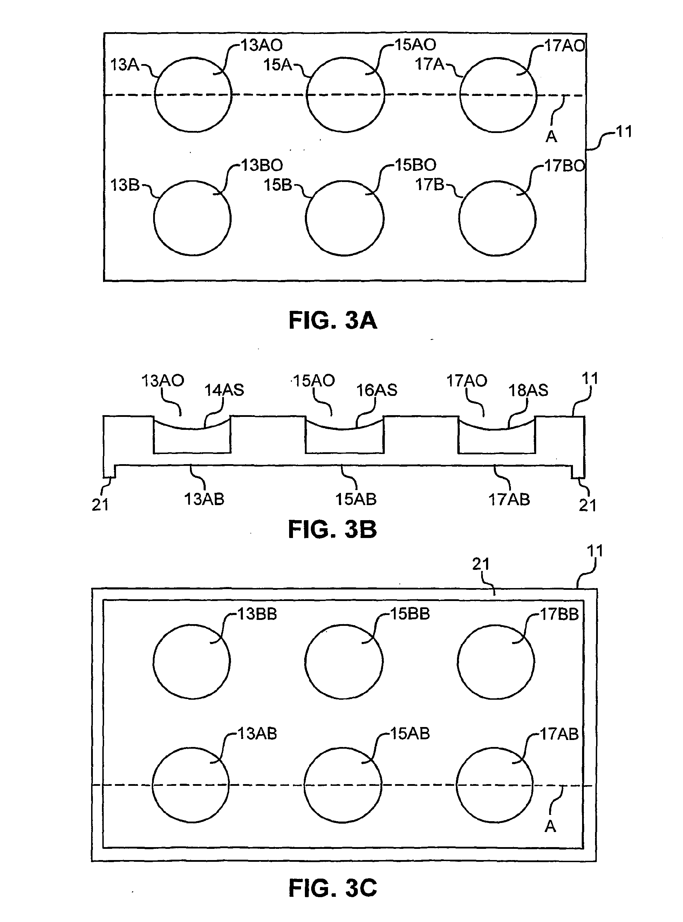

FIG. 3 schematically illustrates an exemplary rectilinear array of reservoirs that may be used with the invention. The reservoir array is provided in the form of a well plate **11** having three rows and two columns of wells. As depicted in FIGS. 3A and 3C, wells of the first, second, and third rows are indicated at **13A** and **13B, 15A** and **15B,** and **17A** and **17B,** respectively. Each is adapted to contain a fluid having a fluid surface. As depicted in FIG. 3B, for example, reservoirs **13A, 15A,** and **17A** contain fluids **14A, 16A,** and **18A,** respectively. The fluid surfaces for each fluid are indicated at **14AS, 16AS,** and **18AS.** As shown, the reservoirs are of substantially identical construction so as to be substantially acoustically indistinguishable, but identical construction is not a requirement. Each of the depicted reservoirs is axially symmetric, having vertical walls extending upward from circular reservoir bases indicated at **13AB, 13BB, 15AB, 15BB, 17AB,** and **17BB,** and terminating at corresponding openings indicated at **13AO, 13BO, 15AO, 15BO, 17AO,** and **17BO.** The bases of the reservoirs form a common exterior lower surface **19** that is substantially planar. Although a full well plate skirt (not shown) may be employed that extends from all edges of the lower well plate surface, as depicted a partial well plate skirt **21** extends downward from the longer opposing edges of the lower surface **19.** The material and thickness of the reservoir bases are such that acoustic radiation may be transmitted therethrough and into the fluid contained within the reservoirs.

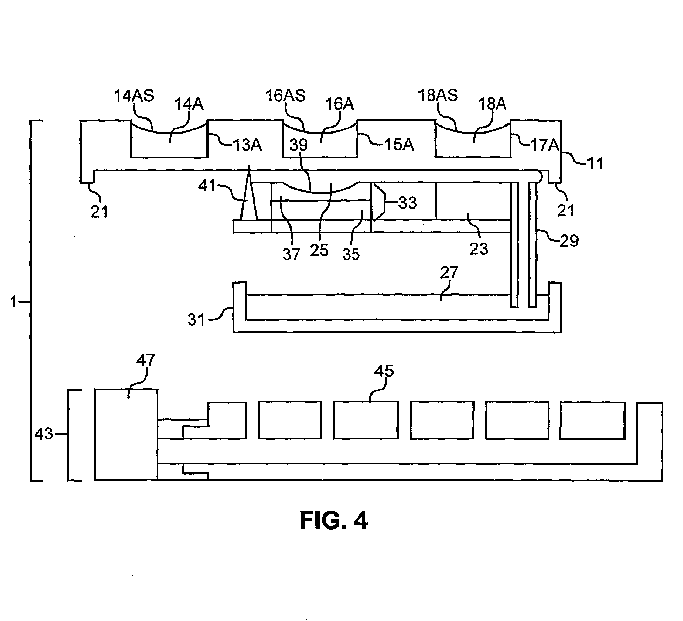

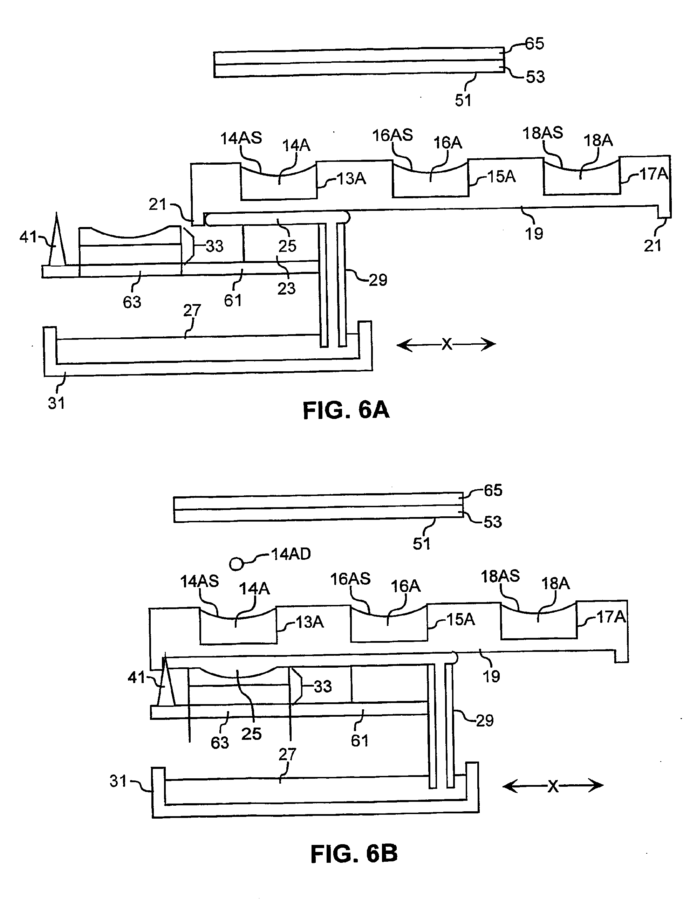

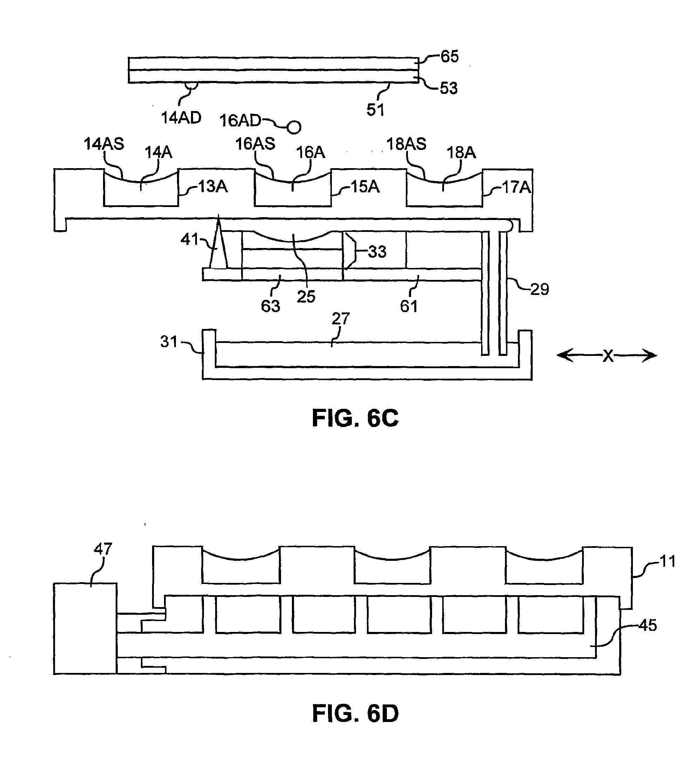

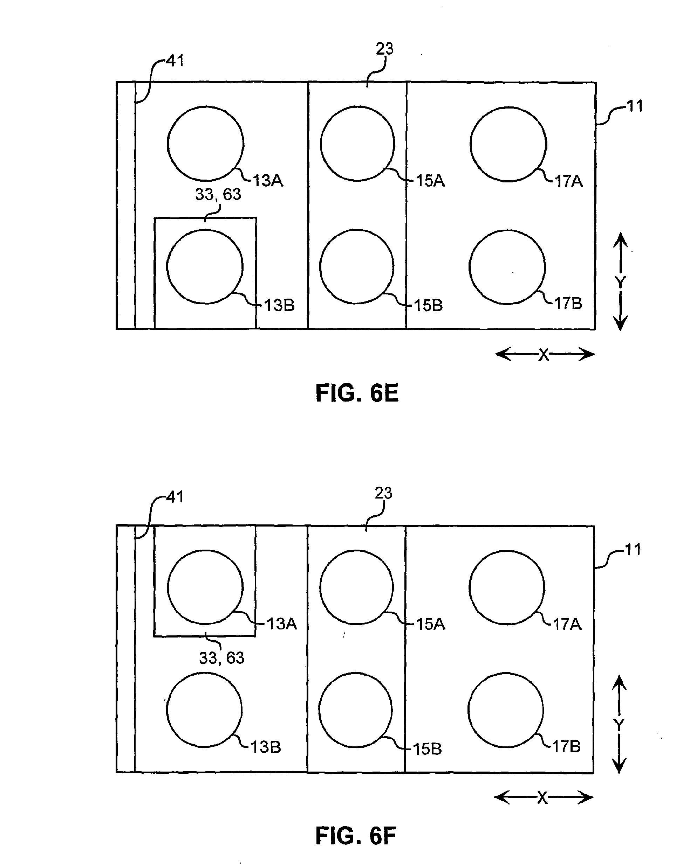

FIG. 4 schematically illustrates in side view a device using the well plate depicted in FIG. 3. The exemplary device **1** depicted in FIG. 4 allows for acoustic assessment of the contents of a plurality of reservoirs and acoustic ejection of fluid droplets from the reservoirs in order to attach biomolecules to a substrate surface. In addition to the well plate **11,** the device also includes an acoustic generator in the form of a transducer assembly. More particularly, the transducer assembly is a phased acoustic array **23** that serves both as the acoustic radiation generator and the analyzer. As shown in FIG. 6, the phased acoustic array **23** has a generally rectangular surface from which acoustic radiation is emitted. Also as depicted, the length of the rectangular surface is aligned with the rows of wells. To ensure proper acoustic coupling between the well plate **11** and the phased acoustic array **23** (as discussed below), it is preferred that the phased acoustic array **23** exceeds the length of the rows of wells in the well plate but is no greater than the distance between the sections of the skirt **21** along the columnwise edges of the well plate **11.** That is, the length of the phased acoustic array is approximately that of the width of the well plate (or length if the well plate has longer rows than columns).

The phased acoustic array **23** as depicted is acoustically coupled to the well plate **11** without contacting any of the fluids within the wells of the well plate **11.** This typically involves either direct or indirect contact between the ejector and the exterior lower surface **19** of the well plate **11.** When direct contact is used in order to acoustically couple the phased acoustic array **23** to the well plate **11,** it is preferred that the direct contact is wholly conformal to ensure efficient acoustic energy transfer. That is, the surface of the phased acoustic array from which acoustic radiation is emitted and the lower surface of the well plate should have corresponding surfaces adapted for mating contact. Without conformal contact, efficiency and accuracy of acoustic energy transfer may be compromised.

As depicted in FIG. 4, acoustic coupling is achieved between the phased acoustic array **23** and the well plate **11** through indirect contact to enhance transfer of acoustic radiation. In this figure, a fluid acoustic coupling medium **25** is placed between the phased acoustic array **23** and bases of the well plate reservoirs via the exterior lower surface **19,** with the phased acoustic array **23** and the well plate **11** located at a predetermined distance from each other. In some instances the acoustic coupling medium may coat the entire lower surface of the well plate. As depicted in FIG. 4, however, the coupling medium **25** is introduced from a coupling medium source **27** via dispenser **29** to selectively coat the lower surface **19** where needed. As the phased acoustic array is adapted for displacement with respect to the lower well plate surface **19** in the directions indicated by arrow **X,** the dispenser **29** is depicted in FIG. 4 as located adjacent to the leading surface of the phased acoustic array **23.** Also as depicted in FIG. 4, an optional collector **31** is employed to collect coupling medium that may drip from the lower surface **19.** As the collector **31** is depicted as containing the coupling medium source **27,** it is evident that the coupling medium may be reused. Other means for introducing and/or placing the coupling medium may be employed as well.

The acoustic coupling fluid is preferably an acoustically homogeneous material in conformal contact with both the phased acoustic array **23** and the exterior lower surface **19** of the well plate. In addition, it is important to ensure that the fluid medium is substantially free of material having different acoustic properties than the fluid medium itself. Furthermore, it is preferred that the acoustic coupling medium be comprised of a material having acoustic properties that facilitate the transmission of acoustic radiation without significant attenuation in acoustic pressure and intensity. Also, the acoustic impedance of the coupling medium should facilitate the transfer of energy from the coupling medium into the container.

The device also includes an acoustic ejector **33** comprised of a single acoustic radiation generator **35** for generating acoustic radiation, and a focusing means **37** for focusing the acoustic radiation at a focal point within the fluid from which a droplet is to be ejected, near the fluid surface. As shown in FIG. 4, the focusing means **37** is comprised of a single solid piece having a concave surface **39** for focusing acoustic radiation generated by the acoustic generator **35,** but the focusing means may be constructed in other ways as discussed above. The acoustic ejector **33** is thus adapted to generate and focus acoustic radiation so as to eject a droplet of fluid, for example, from each of the fluid surfaces **14AS, 16AS,** and **18AS** when acoustically coupled to wells **13A, 15A,** and **17A,** and thus to fluids **14A, 16A,** and **18A,** respectively. The acoustic radiation generator **35** and the focusing means **37** typically function as a single unit controlled by a single controller, but may be independently controlled, depending on the desired performance of the device. Single ejector designs are preferred over multiple ejector designs because accuracy of droplet placement and consistency in droplet size and velocity are more easily achieved with a single ejector.

As depicted, ejector **33** indirectly contacts the well plate via an acoustic coupling medium so as to establish the required acoustic coupling relationship for acoustic ejection. One skilled in the art will recognize that techniques for such indirect contact as described above in the context of acoustic assessment can be readily adapted for acoustic ejection. For example, the ejector **33** and phased acoustic array **23** may, as depicted in FIG. 4, both be acoustically coupled to the well plate **11** via the same fluid-acoustic coupling medium **25.** In this instance, the ejector **33** and the phased acoustic array **23** are maintained at substantially the same distance from each other. Alternatively, the ejector and the phased acoustic array may be independently coupled to the well plate (not shown).

Also as depicted in FIG. 4, an optional blade **41** is provided that conforms to the lower exterior surface **19** of the well plate. Such a blade operates on the same principle employed when a windshield wiper or a squeegee is slid across a surface through the application of appropriate pressure to effect water removal. Furthermore, the coupling medium may be removed through the use of an absorbent material through wiping or blotting action. In addition, as depicted in FIG. 4, a vacuum dryer **43** may be used to remove any coupling medium from the lower exterior surface **19** of the well plate. As depicted, the vacuum dryer is comprised of a vacuum table **45** in fluid communication with a vacuum pump **47.** Once acoustic analysis and optional ejection has taken place from the well plate, the well plate may be placed on the table so as to remove any remaining coupling medium therefrom. One skilled in the art will recognize that other fluid removal technologies may be used in conjunction with the invention as well.

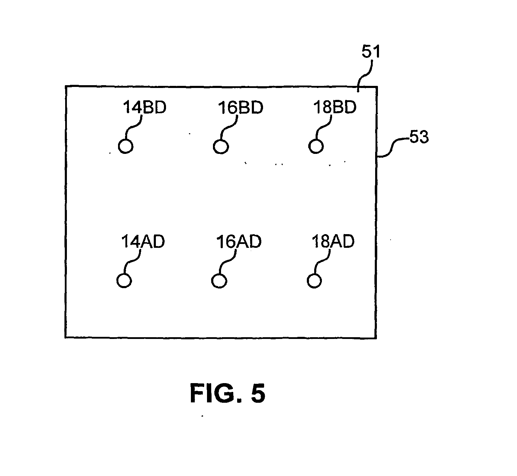

The device depicted in FIG. 4 may be employed to deposit an array of droplets on a substrate. FIG. 5 depicts an exemplary droplet array that may be formed using the inventive device. As shown, the droplet array is formed from six droplet features indicated at **14AD,14BD, 16AD, 16BD,18AD,** and **18BD** on a substantially planar surface **51** of substrate 53. Droplet features **14AD, 14BD, 16AD, 16BD, 18AD,** and **18BD** are ejected from the fluids in reservoirs **13A, 13B, 15A, 15B, 17A,** and **17B,** respectively.

FIG. 6 schematically illustrates the device depicted in FIG. 4 in operation to eject droplets of fluid to form the droplet array depicted in FIG. 5. As shown in FIGS. 6A-6C, a combination positioning means **61** is provided that serves to position the phased acoustic array **23** in acoustically coupling relationship to the lower well plate surface **19.** The combination positioning means **61** also serves to move the phased acoustic array **23,** the ejector **33,** and the blade **41** in the directions indicated by arrow **X.** In addition, as shown in FIGS. 6E and 6F, the ejector **33** may be moved in the directions indicated by arrow **Y** by ejector positioning means **63.** As shown in FIGS. 6A-6C, the phased acoustic array **23,** the ejector **33,** and the blade **41** are generally maintained at the same distance from each other. In FIG. 6A, the phased acoustic array **23** is in position to assess the contents of reservoirs **13A** and **13B.** The acoustic radiation will be reflected under different circumstances. Typically, reflection will occur when there is a change in the acoustic property of the medium through which the acoustic radiation is transmitted. It has been observed that a portion of the acoustic radiation traveling upward will be reflected from the reservoir bases **13AB** and **13BB** as well as from the free surfaces of the fluids contained in the reservoirs **13A** and **13B.** Thus, for example, low energy acoustic radiation may be generated by the phased acoustic array **23** to assess the volume of fluid contained in reservoirs **13A** and **13B.** By determining the time it takes for the acoustic radiation to be reflected by the fluid surface back to the phased acoustic array **23,** and then correlating that time with the speed of sound in the fluid, the distance-and thus the fluid height and the fluid volume-may be calculated. Of course, care must be taken in order to ensure that acoustic radiation reflected by the interface between the reservoir bases and the fluids is discounted.

Once the contents of reservoirs **13A** and **13B** have been assessed, the combination positioning means, as depicted in FIG. **6B****,** moves the phased acoustic array **23** in position to assess the contents of reservoirs **15A** and **15B.** Simultaneously, the ejector **33** is positioned in alignment with reservoirs **13A** and **13B.** As a result, the ejector **33** may eject a droplet of fluid from either or both reservoirs **13A** and **13B,** depending on the assessment made using the phased acoustic array **23** in FIG. 6A. In some instances, historical droplet ejection data associated with the ejection sequence may be employed as well to determine whether and/or how fluid should be ejected from any of the reservoirs.

In order to form the droplet array shown in FIG. 5, droplets should be ejected from each of the reservoirs. To eject a droplet of fluid from reservoir **13A,** the ejector positioning means **63,** as depicted in FIGS. 6B and 6E, may position the ejector **33** directly below reservoir **13A** and in acoustic coupling relationship therewith through acoustic coupling medium **25.** In addition, a substrate positioning means **65** positions the substrate **53** such that substrate surface **51** is in appropriate droplet receiving relationship to reservoir **13A.** Once the ejector, the reservoir, and the substrate are in proper alignment, the acoustic radiation generator **35** is activated to produce acoustic radiation that is directed toward the free fluid surface **14AS** of the reservoir **13A.** The acoustic radiation will then travel in a generally upward direction toward the free fluid surface 14S. As a result, droplet **14AD** is ejected from the fluid surface **14AS** onto a designated site on the underside surface **51** of the substrate **53.** The ejected droplet may be retained on the substrate surface by solidifying thereon after contact; in such an embodiment, it may be necessary to maintain the substrate at a low temperature, i.e., a temperature that results in droplet solidification after contact. Alternatively, or in addition, a molecular moiety within the droplet attaches to the substrate surface after contact, through adsorption, physical immobilization, or covalent binding.

Then, the substrate positioning means **65** repositions the substrate 53 over reservoir **13B** in order to receive a droplet therefrom at a second designated site. FIG. 6F shows that the ejector positioning means **63** has repositioned ejector **33** below reservoir **13B.** Once properly aligned, the acoustic radiation generator **35** of ejector **33** is again activated to eject fluid from reservoir **13B.**

In FIG. 6C, the droplet **67** has been deposited as a droplet feature on substrate surface **53,** and the phased acoustic array **23** is positioned by combination positioning means **61** in position to assess the contents of reservoirs **17A** and **17B.** Similarly, the ejector **33** is positioned in alignment with reservoirs **15A** and **15B.** Also depicted in FIG. 6C is the ejection of a droplet **16AD** of fluid from reservoir **15A.** As acoustic coupling medium **25** is no longer needed directly beneath reservoirs **13A** and **13B,** blade **41** is moved by the combination positioning means **61** to direct acoustic coupling medium from the well plate surface **19** into collector **31.** Once the droplet array is completed on substrate surface **51,** the well plate **11** is placed on vacuum table **45** to ensure that all acoustic coupling medium is removed from the well plate **11,** as depicted in FIG. 6D.

As discussed in U.S. Patent Application Publication No. 20020037579 to Ellson et al., focused acoustic radiation may be used to eject fluid droplets toward discrete sites on a substrate surface for deposition thereon, as well as to transfer fluids from one set of containers into another set of containers. For certain diagnostic applications or preparations of diagnostic materials, it would be desirable to use the same acoustic assessment device to assess the contents of reservoirs from which fluids are dispensed and to determine whether droplets are properly received on the substrate. Thus, it should be apparent that when the invention is employed to deposit droplets on a surface, the invention may be further employed to interrogate the substrate to assess the contents and/or location of the droplets on the substrate surface.

Thus, the present invention represents a significant improvement over certain known technologies relating to the acoustic assessment of the contents of a plurality of reservoirs. Unlike certain previously known acoustic assessment technologies that require a sensor in direct contact with a fluid in a reservoir be assessed, the invention allows for assessment of the contents of a plurality of containers without direct contact with the contents of the containers. In addition, unlike non-contact acoustic systems such as those described in U.S. Patent No. 5,880,364 to Dam, direct measurements are made that may provide information relating to the volume as well as to the properties of the fluids in the reservoir. This use of fluid acoustic coupling media overcomes low acoustic impedance problems associated with technologies that rely on gaseous materials for acoustic coupling, because higher frequency acoustic waves that would rapidly be attenuated in air can be transmitted effectively through liquids coupling media.

In addition, acoustic assessment is a generally noninvasive technique that may be carried out regardless of whether the reservoirs are sealed or open. That is, acoustic assessment does not require extracting a sample for analysis or other mechanical contact that may result in sample cross-contamination. In addition, unlike optical detection techniques, optically translucent or transparent reservoirs are not required. This, of course, provides a wider range of choices for material that may be employed for reservoir construction. In addition, the use of opaque material would be particularly advantageous in instances wherein the reservoirs are constructed to contain photosensitive fluids.

For example, the invention may be employed to detect whether the contents of a sealed reservoir are at least partially frozen without opening the reservoir. This would be useful when it is known that a reservoir contains a substance that is capable of existing as a fluid over a certain temperature range, but it is unclear as to the temperature history of the reservoir, e.g., whether freeze/thaw cycles existed. For example, water is capable of existing as a fluid at a temperature of about 0°C to about 100°C. If it is unclear whether the exterior temperature of a reservoir is indicative of the reservoir's interior temperature, the inventive device is well suited to determine whether any or all of the contents of the reservoir is a fluid.

Furthermore, the inventive device may be constructed to be highly compatible with existing infrastructure of materials discovery and with existing automation systems for materials handling. For example, the invention may be adapted for use as an alternative or a supplement to content assessment means that are based on optical detection. In some instances, sonic markers may be provided in the reservoirs to identify the contents of the reservoir. Thus, the invention may be employed as a means for inventory identification and control in a number of contexts, including, but not limited, to biological, biochemical, and chemical discovery and analysis. In particular, the invention is particularly suited for use in assessing the contents of reservoirs containing pharmaceutical solutions.

Variations of the present invention for acoustically assessing the contents of reservoirs will be apparent to those of ordinary skill in the art. For example, while FIG. 1 depicts the device in operation to form a biomolecular array bound to a substrate, the device may be operated in a similar manner to format a plurality of fluids, e.g., to transfer fluids from odd-sized bulk containers to wells of a standardized well plate. Similarly, while FIG. 2 illustrates that the acoustic radiation generator and the detector are in vertical opposing relationship, other spatial and/or geometric arrangements may be employed so long as acoustic radiation generated is transmitted through at least a portion of the reservoir to the detector.

The invention as claimed is used to control the composition and/or volume of fluid in one or more reservoirs, a reservoir containing a fluid is provided and a characteristic of the fluid is monitored. Typically, the fluid characteristic is monitored acoustically using a monitoring means that does not directly contact any fluid contained in the reservoir. For example, the monitoring means may comprise an acoustic radiation generator and an analyzer for analyzing acoustic radiation from the generator that has been transmitted through the reservoir. However, non-acoustic monitoring means may be used as well. Additional fluid may be introduced into the reservoir using acoustic radiation as well. This is useful for maintaining the concentration of solutes and the solvent composition of a reservoir within certain predetermined bounds. As a result, the invention enables more precise transfer and/or dispensing of fluids. In addition, due to the precision and accuracy associated with acoustic technology, the device is particularly suited for controlling the composition and/or volume of fluids in small volume reservoirs.

Thus, the invention provides a device that includes a reservoir, a monitoring means for monitoring a characteristic of any fluid contained in the reservoir, and an introducing means for introducing additional fluid into the reservoir based on the fluid characteristic monitored by the monitoring means. In some instances, the device may further include a dispensing means for controllably dispensing fluid from the reservoir. Although focused acoustic radiation may be used to dispense fluid from the reservoir, other types of focused radiation, e.g., electromagnetic radiation, may be used as well.

Acoustic radiation may be used to dispense fluid from a reservoir, monitor the composition and/or volume of the reservoir, and/or introduce additional fluid into the reservoir. Accordingly, the monitoring means, the introducing means, and/or the dispensing means may use an acoustic generator for generating acoustic radiation. That is, an acoustic generator may be associated with the dispensing means, the monitoring means, and/or the introducing means. Optimally, the device is comprised of a single acoustic generator. In addition, the monitoring means may include an analyzer for analyzing acoustic radiation generated by the acoustic generator, as discussed above.

Such a device may also be used to control the composition and/or volume of a plurality of fluids, immiscible or otherwise, in one or more reservoirs. In the case where a plurality of reservoirs is provided, each may be adapted to contain the same fluid or different fluids. In addition, the monitoring means may be adapted to monitor a characteristic of fluid contained in each reservoir, and an introducing means may be adapted to introduce additional fluid into any selected reservoir based on the characteristic of fluid contained in the selected reservoir as monitored by the monitoring means. Typically, the monitoring means is adapted to monitor the characteristic of fluid contained in a single reservoir at a time. For the case of a plurality of immiscible fluids within a single reservoir, the monitoring means may be adapted to monitor a characteristic of at least one of the immiscible fluids in the reservoir, and the introducing means may be adapted to introduce additional fluid of the appropriate type(s) based on the fluid characteristic monitored by the monitoring means.

The invention is particularly suited for controlling the fluid content in a reservoir containing a multi-constituent fluid in which one constituent may be preferentially removed, leaving an increased concentration or proportion of the remaining constituent, as discussed below.

FIG. 9 illustrates such an embodiment of the inventive device that allows for control over the composition and/or volume of a plurality of reservoirs as well as for acoustic ejection of fluid droplets from the reservoirs. In general, the device depicted in FIG. 9 is similar to that depicted in FIG. 1, except that an optional cover **20** is provided over the reservoirs so as to seal fluids **14** and **16** within the reservoirs **13** and **15,** respectively. In addition, an introducing means **60** is provided to allow fluid to be transported from a source **62** of additional fluid **66** into the reservoirs via outlet **64.** The introducing means is controlled by combination unit **38** and may be positioned by the ejector positioning means **61** or a separate additional fluid positioning means (not shown). Thus, for example, the introducing means **60** may allow fluid to be transported into a reservoir to which ejector **33** is acoustically coupled.

In operation, the acoustic ejector **33** is positioned by ejector positioning means **43,** shown below reservoir **13,** in order to achieve acoustic coupling between the ejector and the reservoir through acoustic coupling medium **41.** Once the ejector, the reservoir, and the substrate are in proper alignment, the acoustic generator **35,** as depicted in FIG. 9A, is activated to produce acoustic radiation that is directed toward a free fluid surface **14S** of the first reservoir. The acoustic radiation will then travel in a generally upward direction toward the free fluid surface **14S** and be reflected thereby. The reflected acoustic radiation may be then employed for analyzing a characteristic of the fluid within reservoir **13.**

In order to deposit droplets of fluid from the reservoirs on a substrate surface using the inventive device, substrate **53** is positioned above and in proximity to the first reservoir **13** such that one surface of the substrate, shown in FIG. 9 as underside surface **51,** faces the reservoir and is substantially parallel to the surface **14S** of the fluid **14** therein. As depicted in FIG. 9B, the ejector, the reservoir, and the substrate are positioned in proper alignment, and the cover **20** is removed from the reservoirs **13** and **15.** Upon removal of the cover **20** from the reservoir **13,** and before fluid **14** has an opportunity to evaporate from reservoir **13,** the acoustic generator **35** is activated to produce acoustic radiation that is directed by the focusing means **37** to a focal point **14P** near the fluid surface **14S** of the first reservoir. As a result, droplet **14D** is ejected from the fluid surface **14S** onto a designated site on the underside surface **51** of the substrate.

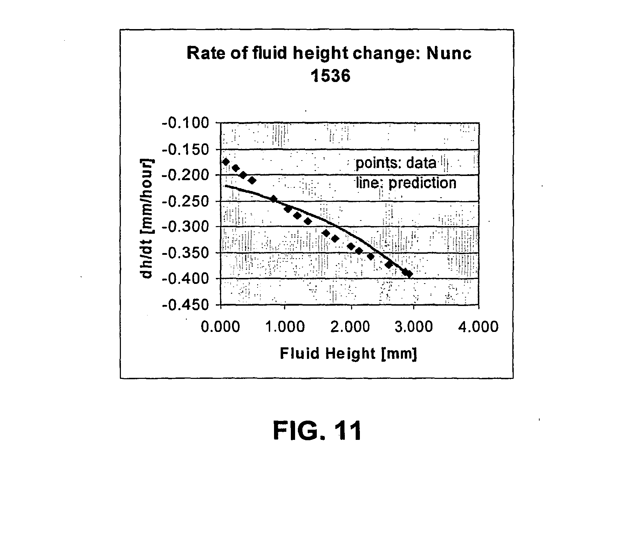

Then, as shown in FIG. 9C, a substrate positioning means **65** repositions the substrate **53** over reservoir **15** in order to receive a droplet therefrom at a second designated site, and the ejector positioning means **61** repositions the ejector below reservoir **15** and in acoustically coupled relationship thereto by virtue of acoustic coupling medium **25.** Once properly aligned, the acoustic generator **35** of ejector **33** is activated to determine whether and/or how to eject fluid from the reservoir. In some instances, fluid evaporation may take place from reservoir **15** after the removal of cover **20** therefrom. When the fluid **16** in reservoir **15** is a liquid containing a single constituent, e.g., water, evaporation of fluid **16** from the reservoir **15** does not alter the composition of the fluid **16** remaining in the reservoir, only the volume and height of the fluid remaining in the reservoir. Thus, the monitoring means may be adapted to monitor the change in height of fluid **16** and the associated "movement" of surface **16S** toward the base **15B** of reservoir **15.** An example of acoustical monitoring the evaporation of water from a single well in a well plate comprised of 1536 wells is shown in FIG. 11, discussed further, *infra.*

FIGS. 9C and 9D depict a situation in which a quantity of fluid **16** has evaporated from reservoir **15.** Such evaporation may occur as a result of the removal of cover **20** from reservoir **15,** as depicted in FIG. 9B, and the time associated with ejection of fluid from reservoir 13. Such evaporation is revealed as the result of the assessment depicted in FIG. 1C. As a consequence, introducing means **60** is activated so as to transport fluid **66** from the source **62** of additional fluid into reservoir **15** via outlet **64.** Once an appropriate quantity of additional fluid is introduced into reservoir **15,** the ejector **33,** as depicted in FIG. 9E, is activated to eject a droplet from the reservoir **15** onto the second designated site on the substrate surface **51.**

FIG. 10 schematically illustrates in simplified cross-sectional view an embodiment of the inventive device wherein an acoustic ejector is employed as a means for introducing additional fluid into the reservoir from which fluid may be dispensed. The device **11** is similar to that illustrated in FIG. 9 in that a first reservoir, indicated at **13,** is provided containing a first fluid. In addition, the device **11** also includes an acoustic ejector **33** comprised of an acoustic generator **35** for generating acoustic radiation and a focusing means **37** for focusing the acoustic radiation at a focal point within the fluid, near the fluid surface, from which a droplet is to be ejected. Furthermore, a combination unit **38** is provided that both serves as a controller and a component of an analyzer, and the ejector is acoustically coupled to reservoir **13** through indirect contact via acoustic coupling medium **25.** However, the device **11** depicted in FIG. 9 includes an additional acoustic ejector **71,** similar in construction to the acoustic ejector **33,** for ejecting fluid from reservoir **13.** The additional acoustic ejector **71** serves as an introducing means **60** that allows fluid to be ejected from an additional reservoir **62** of additional fluid **66** into reservoir **13.**

As depicted in FIG. 9, the additional fluid **66** within reservoir **62** has a fluid surface indicated at **67.** The additional acoustic ejector **71,** like acoustic ejector **33,** is comprised of an acoustic generator **73** for generating acoustic radiation and a focusing means **75** for focusing the acoustic radiation at a focal point **68** within fluid 66 near the fluid surface **67.** The acoustic generator contains a transducer **74,** e.g., a piezoelectric element, commonly shared by an analyzer. As shown, a combination unit **38** is provided that both serves as a controller and a component of an analyzer. The additional ejector **71** is acoustically coupled to fluid **66** in reservoir **62** to eject droplets therefrom via indirect contact between the additional ejector **71** and the external surface of reservoir **62** through coupling medium **69.**

As before, the introducing means **60** may be employed to control the composition and/or volume of reservoir **13,** for example, to replenish the composition and/or volume of reservoir **13** due to evaporation. In order to eject droplets of fluid from reservoir **62** to reservoir **13,** the acoustic generator **73** is activated to produce acoustic radiation that is directed by the focusing means **75** to a focal point **68** near the fluid surface **67** of the reservoir **62.** That is, an ejection acoustic wave having a focal point **68** near the fluid surface **67** is generated in order to eject at least one droplet **70** of the fluid, wherein the optimum intensity and directionality of the ejection acoustic wave is selected to result in the appropriate trajectory to travel from reservoir **62** to reservoir **13.** It should be noted that there are a number of ways to ensure that droplets ejected from reservoir **62** travel into the reservoir **13.** For example, when the reservoirs are stationary, as depicted in FIG. 10, the desired intensity and directionality of the ejection acoustic wave may be selected to ensure that the droplet ejected travels in a trajectory that has both vertical and horizontal directional vectors relative to the location of the reservoirs. Alternatively, a droplet may be ejected vertically from reservoir **62** and the reservoirs subsequently moved such that the ejected droplet falls into reservoir **13.** This has been described, e.g., in U.S. Patent Application Publication Nos. 20020064808 and 20020064809, each to Mutz et al. It should be apparent, then, that aspects of acoustic technology applicable for acoustic dispensation of fluid from a reservoir may also be employed to introduce additional fluid into the reservoir.

While focused acoustic radiation is typically applied to a fluid to eject droplets in a generally upward direction (e.g., as depicted in FIG. 9E and FIG. 10), it is possible to use focused radiation to eject droplets in a generally downward direction as well. For example, a fluid may be restrained on a lower surface of a substrate through surface forces. As a result, a free surface may be formed below the fluid. By coupling an acoustic ejector to an opposing upper surface of the substrate and activating the ejector, acoustic radiation may be directed to a focal point near the free fluid surface, thereby ejecting one or more droplets in a generally downward direction from the free fluid surface. Similarly, acoustic ejection may be employed to form horizontally directed droplets as well.

Thus, the invention provides a method for acoustically controlling the composition and/or volume of a fluid within a reservoir. The method involves at least two steps: a monitoring step and a potential introducing step. The monitoring step involves monitoring a characteristic of a fluid contained in a reservoir, typically without directly contacting the fluid. The introducing step involves introducing additional fluid into the reservoir according to the results of the monitoring step. The method further involves generating acoustic radiation in order to carry out the monitoring step, the introducing step, or both. When acoustic radiation is generated to carry out the monitoring step, the radiation preferably interacts with the fluid contained in the reservoir and is analyzed thereafter to carry out the introducing step. For example, the generated acoustic radiation may be transmitted through the fluid in the reservoir and analyzed thereafter. In some instances, the acoustic radiation may be reflected by a free fluid surface within the reservoir before analysis. In addition, acoustic radiation generation and analysis may be repeated at predetermined periodic intervals to effect substantially continuous monitoring of the fluid. When acoustic radiation is generated to introduce additional fluid into the reservoir, the generated acoustic radiation may be applied to a source of additional fluid in any manner effective to transport it into the reservoir. This may involve fluid ejection or flow from a reservoir, through a nozzle, or using a nozzleless technique.

Typically, additional fluid is introduced in the reservoir so as to maintain the monitored fluid characteristic within a predetermined range of acceptable values for that fluid characteristic. In some instances, additional fluid having substantially the same composition as that of the fluid already contained in the reservoir is introduced into the reservoir. In other instances, additional fluid having a composition different from that of the fluid contained in the reservoir is introduced into the reservoir. The selection of the particular additional fluid to be introduced into the reservoir is discussed below in greater detail.

The method of acoustical regulation is particularly suited for controlling the composition and/or volume of fluid in a reservoir from which fluid is dispensed. In some instances, fluid is dispensed from the reservoir before the composition and/or volume of the fluid are monitored. In other instances, fluid is dispensed after additional fluid has been introduced into the reservoir. Optionally, fluid is acoustically dispensed from the reservoir. This may be carried out, for example, by employing focused acoustic radiation so as to eject fluid from the reservoir. In addition, the monitoring step is carried out according to the dispensation of fluid from the reservoir. For example, the monitoring step may be carried out at least once per occurrence of fluid dispensation. In some cases, the monitoring step is triggered by fluid dispensation.

As discussed above, the invention may involve the use of acoustic or non-acoustic techniques to monitor a characteristic of a fluid contained in a reservoir. Similarly, acoustic or non-acoustic techniques may be used to introduce fluid into the reservoir(s) or dispense fluid from the reservoir(s). As discussed above, nozzleless acoustic ejection may be used as an introducing means or as a dispensing means for transporting fluid droplets. Other fluid transport techniques using devices known in the art may be used as well, and include, but are not limited to, inkjet printheads (both thermal and piezoelectric), pipettes, capillaries, syringes, displacement pumps, rotary pumps, peristaltic pumps, vacuum devices, flexible and rigid tubing, valves, manifolds, pressurized gas canisters, and combination thereof. In short, the dispensing means and introducing means may employ any fluid-transport technology that is discussed herein or is otherwise known in the art.

As discussed above, there are many instances in which there is a need to control the composition and/or volume of a fluid within a reservoir. For example, when a reservoir contains fluid comprised of a solid constituent dissolved in a liquid solvent, preferential removal of the solvent, e.g., through evaporation, increases the solid constituent concentration. This may in turn increase the viscosity of the fluid contained in the reservoir, and, in some cases, result in precipitation of the solid constituent out of solution. Precipitation of solid particles out of solution may, for example, clog nozzles of inkjet printheads as well as obstruct fluid transfer tubing. In addition, in the case of nozzleless fluid ejection using focused acoustic radiation, evaporation of a solvent from a fluid containing a solid solute has been found to be a major cause of variations in the repeatability and quantity of solid constituent transfer.

When the device depicted in FIG. 9 is employed, there are at least four modes in which fluid content in a reservoir may be changed, and the monitoring means is typically suitable for monitoring for any change in the content of a reservoir as a result of such fluid transfer modes. First, fluid may be introduced into the reservoir through the introducing means. Second, fluid may be removed from the reservoir through ejection using focused acoustic radiation. Third, fluid may leave the reservoir through evaporation. An example of acoustically monitoring the evaporation of a single constituent fluid, i.e., water, from a single well in a 1536 unit well plate is shown in FIG. 11. FIG. 11 graphically depicts the measured rate of fluid height change as plotted against the fluid height in a well of a 1536 unit well plate. The height of the fluid in the well was measured through acoustic microscopy. A fourth possibility is that the fluid within the reservoir may absorb atmospheric gases such as water vapor. This is typically the case when the fluid in the reservoir contains a hydrophilic constituent, e.g., DMSO. In such a case, additional DMSO may be introduced into the reservoir to ensure that absorbed water does not exceed a certain concentration.

With multiple-constituent fluids, the proportions of the constituents may vary according to the fluid transfer mode. In the case of a fluid that contains a solvent and a solute, if the initial - concentration of the solution in the reservoir is known, then the mass of the solute may be determined by using the acoustically measured fluid volume in the reservoir. Evaporation of the solvent does not change the mass of the solute, and the effect of evaporation on the volume of fluid in the reservoir can be tracked acoustically. The loss of solute via droplet ejection may be calculated from the volume of the drop ejected and the concentration of the solution at the time of ejection. Thus, for example, additional solvent may be introduced into the reservoir to maintain the concentration of solute in the reservoir to compensate for solvent evaporation. In addition, it follows that a dilute solution of the solute may be introduced into the reservoir to ensure that the volume of fluid in the reservoir and the concentration of the solute in the fluid are maintained at a constant level. Similarly, absorption of a solute-free fluid, e.g., atmospheric water vapor, does not change the mass of solute, and the effect of absorption on the volume of fluid in the reservoir can be tracked acoustically. The loss of solute via droplet ejection may be calculated from the volume of the drop ejected and the concentration of the solution at the time of ejection.

Thus, if a reservoir contains a very dilute solution comprising water and an oligonucleotide, then as the water evaporates, the concentration of the oligonucleotide rises until the solubility limit is reached. In order to form reproducible features of oligonucleotide on a substrate, it is often preferable to create spots of the same size and identical concentrations to get the same signal intensity in the spots. Thus, the invention provides a method for maintaining drop volume consistency and signal intensity within the formed spot. This may involve, for example, ejecting droplets of substantially identical volume and/or composition at designated sites on a substrate surface.

A more complex case occurs when two miscible solvents with different vapor pressures are present in the reservoir, since the evaporation rates for the two constituents will differ. This difference in evaporation rates leads to the more rapid depletion of one solvent relative to the other, and hence, would require some independent control over the volumes of each solvent introduced into the reservoir to replenish that lost through evaporation. The measured acoustic properties of the desired proportions of the solvents in the binary mixture could also be used to audit and control the reservoir mixture. Fluid content assessment could, in some instances, be taken upon the initial filling of the well. It should be noted that these mass balance considerations may be described using known equations.

Similarly, the invention may be employed to control the composition and/or volume of immiscible fluids within a reservoir. The use of focused acoustic radiation in conjunction with immiscible fluids in a reservoir has been described, for example, in U.S. Patent Application Publication No. 20020037375 to Ellson et al. One immiscible fluid may be used to suppress evaporation of another fluid. In addition, such fluids may form an upper and a lower layer in a reservoir The invention may involve the individual monitoring and/or control over each of the immiscible fluids.

For example, when the immiscible fluids form an upper and a lower layer, the upper layer may serve to encapsulate droplets ejected from the lower layer. However, as droplets of the fluid from the lower layer are ejected through the upper layer, fluid depletion of the upper layer may occur. In turn, the thickness of the encapsulating layer may decrease. Thus, the invention may be employed to maintain the upper layer of fluid within a range of appropriate thicknesses by monitoring for upper layer fluid depletion and introducing additional fluid to compensate for such fluid depletion.

Alternatively, the ratio of the thickness of the upper fluid layer to the lower fluid layer may increase as fluid from the lower layer is preferentially ejected from a reservoir. When the reservoir exhibits a tapered profile, the thickness of the upper layer may increase as fluid is ejected from the lower layer. That is, this may occur when the overall fluid level drops at a rate such that the cross-sectional area of the reservoir at the fluid surface decreases to an extent that cannot be compensated by the rate of fluid removal from the upper layer. In such a case, additional fluid may be introduced into the lower layer or removed from the upper layer.

As discussed above, the invention may be used to in conjunction with fluids that are inhomogeneous and/or contain multiple phases of materials as well as with fluids that are homogeneous. However, it should be noted that some homogeneous fluids may become destabilized and become inhomogeneous under certain circumstances, and vice versa. For example, focused radiation may cause local perturbations in a reservoir of fluid, which, in turn, result in the formation of a separate phase in the fluid. This may involve, for example, the nucleation and growth of a bubble out of a fluid from solute gas. Similarly, application of focused radiation may serve to homogenize an otherwise inhomogeneous fluid. Thus, in another aspect, the invention may be used in conjunction with the application of focused radiation to homogenize or dehomogenize a fluid in a reservoir.

It is to be understood that while the invention has been described in conjunction with the preferred specific embodiments thereof, the foregoing description is intended to illustrate and not limit the scope of the invention. Other aspects, advantages, and modifications will be apparent to those skilled in the art to which the invention pertains.

The following examples are put forth so as to provide those of ordinary skill in the art with a disclosure and description of how to implement the invention, and are not intended to limit the scope of what the inventors regard as their invention.

### EXAMPLE 1

Experiments were performed to determine the usefulness of acoustic echoing to carry out *in situ* measurements of fluid properties. About 45 uL of fluid comprised of a solution containing 70% DMSO and 30% water was pipetted into a well of a polypropylene well plate containing 384 wells. The fluid exhibited a concave fluid surface in the well. A transducer was aligned at approximately the center of the well and the transducer height was optimized for ejection. A toneburst was applied to the fluid to perturb the fluid surface and to produce a subthreshold ejection cone. A toneburst was then applied to the transducer (10 MHz, F#2), of 10 MHz center frequency, and of energy approximately 1.5 dB below ejection threshold. The initial cone produced contained many spatial frequencies, which propagated as capillary waves outward toward the well walls. Then, the waves were partially reflected from the well walls through the center of the well, toward the opposing well walls, again reflected, and so on. In other words, the capillary waves reverberated radially within the well. While capillary waves are generally considered dispersive, because waves of different wavelength travel at different speeds, this reverberation is somewhat different from, but can nevertheless be reasonably approximated as corresponding to, a dispersive membrane.

After the toneburst was applied, a series of echo pulses was generated to monitor the perturbation of the fluid surface. An echo pulse was generated every 200 microseconds, and three hundred pulses were generated in all. The reflected acoustic signals were logged in the time window of 25 microseconds to 40 microseconds following each pulse. This allowed for the acoustic monitoring of the fluid surface "ring" as capillary waves reverberated from the walls of the well. The up and down motion of the fluid surface at the middle of the well was monitored and recorded. About 60 milliseconds after the application of the acoustic toneburst, 300 traces were obtained, each trace containing an echo signal from the fluid surface. Through echo correlation analysis, a time-delay value was then obtained for each echo signal.

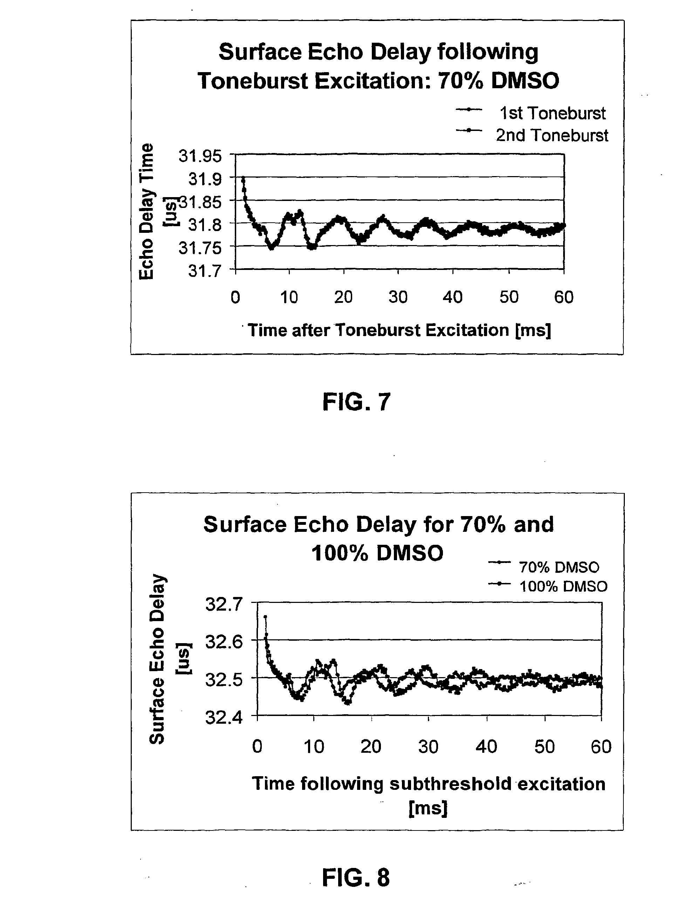

FIG. 7 is a graph that plots the measured echo delay time (roundtrip time of flight for a pulse from the transducer to the well fluid surface) as a function of time after the toneburst. Data from two successive measurements are shown, indicating the repeatability of the measurement. From the data contained in FIG. 7 it was found that the pulse echo signals measured in the first 1.5 milliseconds following the toneburst excitation are too different from those of a "normal" surface echo to produce meaningful surface height information. After about 2 milliseconds, the curvature of the fluid surface is sufficiently low that the pulse echo shapes look much more like "normal" surface reflections.

From the data contained in FIG. 7, it was determined that a change in the echo delay time of 0.1 microseconds corresponds to a change in fluid height of approximately 80 micrometers. Thus, it is evident from the data contained in FIG. 7 that after the application of the toneburst, there is an initial surface relaxation, followed by reverberation of the fluid surface. It appears that at shorter times (e.g., 10 milliseconds), capillary waves of higher spatial frequency are present, which produce the harmonic content in the fluid surface motion. By about 25 milliseconds, however, it appears that the fundamental reverberation mode is dominant. By using data from FIG. 7, fluid properties such as surface tension and viscosity may be determined. Generally, the surface tension dictates the periodicity of the signal seen in FIG. 7, and the viscosity determines the damping of the fluid surface reverberation. Depending on the time regime of interest, various analytical techniques may be used.

### EXAMPLE 2

Measurements similar to those described in Example 1 were made, except that a fluid containing 100% DMSO was employed in place of the solution containing 70% DMSO and 30% water. FIG. 8 is a graph that plots the measured echo delay time for this fluid as well as for the solution containing the DMSO and water mixture as a function of time after the toneburst. Since optimal delay time is slightly different for the two fluids, the data for the mixture are plotted with an arbitrary offset in the vertical direction for ease in visual comparison.

The data for the two fluids were fitted to exponentially decaying sinusoidal waveforms, in the time period from 25 milliseconds to 60 milliseconds following the toneburst. The surface oscillation period and exponential delay time for the fluid containing the DMSO and water mixture are 8.11 milliseconds and 27.4 milliseconds, respectively. The surface oscillation period and exponential delay time for the fluid containing the 100% DMSO are 8.98 milliseconds and 50.6 milliseconds, respectively.

Because the exponential damping time generally varies inversely with the fluid viscosity, the data for the two fluids imply that the viscosity of the DMSO and water solution is 1.82 times greater than the viscosity of the 100% DMSO fluid. This is in good agreement with the reported ratio of 1.85. Similarly, because the surface oscillation period is generally proportional to the inverse square root of the surface tension, the surface tension of the DMSO and water solution should be 1.23 times greater than that of the 100% DMSO. This also in good agreement with the reported surface tension for 100% DMSO (44 dyne/cm) and the reported surface tension for water (72 dyne/cm).

### EXAMPLE 3

A well of a well plate is filled with a fluid. A transducer is aligned at approximately the center of the well, and the transducer height is optimized for ejection. A toneburst is applied to the fluid to perturb the fluid surface and to produce a superthreshold ejection cone. As a result, a droplet is formed and separated from the ejection cone.

Before, during, and after the formation of the ejection cone, a series of echo pulses is generated to monitor the perturbation of the fluid surface. As a result, the formation of the droplet is monitored through a series of such echo events.

### EXAMPLE 4

A well of a well plate is filled with a fluid. A transducer is aligned at approximately the center of the well, and the transducer height is optimized for ejection. A series of tonebursts is applied to the fluid to perturb the fluid surface and to produce an ejection cone. Immediately before, during, and after the formation of the ejection cone, a series of echo pulses is generated to monitor the perturbation of the fluid surface as a result of each toneburst. As a result, the threshold for ejection is determined.

## Claims

1. A device (1) for controlling the composition of a fluid (14) within a reservoir (13); comprising:
an acoustic generator (35) for generating acoustic radiation;
a reservoir (13) containing a fluid (14) comprised of a plurality of constituents;
an acoustic coupling medium (25) interposed between the acoustic generator (35) and the reservoir (13);
means for positioning (61) the acoustic generator (35) in an acoustically coupled relationship to the reservoir (13) such that the acoustic radiation generated by the acoustic generator (35) is transmitted through at least a portion of the reservoir (13);
a means for monitoring (38) a characteristic of the fluid (14) contained in the reservoir (13), wherein the monitoring means is external to the reservoir (13) and does not directly contact the fluid (14) contained in the reservoir (13);
a source (62) of additional fluid (66) having a composition different from that of the fluid (14) contained in the reservoir (13);
a means for introducing (60) the additional fluid (66) from the source (62) into the reservoir (13) based on the characteristic monitored by the monitoring means (38) so as to control the composition of the fluid (14) in the reservoir (13) within predetermined bounds;
wherein the acoustic generator (35) is associated with monitoring means (38), the introducing means (60), or both.

2. The device of claim 1, wherein the reservoir (13) contains no more than about 1 mL of fluid.

3. The device of claim 2, wherein the reservoir (13) contains no more than about 1 µL of fluid.

4. The device of claim 3, wherein the reservoir (13) contains no more than about I nL of fluid.

5. The device of any of claims 1 to 4, wherein the acoustic generator (35) is associated with the monitoring means (38) and the monitoring means further comprises an analyzer for analyzing acoustic radiation generated by the acoustic generator (35).

6. The device of claim 5, wherein the analyzer is positioned to receive acoustic radiation generated by the acoustic generator (35) and transmitted through the fluid (14) contained in the reservoir (13).

7. The device of claim 6, wherein the analyzer is positioned to receive acoustic radiation reflected by the free surface of fluid (15) contained in the reservoir (13).

8. The device of claim 7, wherein the analyzer comprises a component (36) common to the acoustic generator (35).

9. The device of claim 8, wherein the component (36) common to the analyzer and the acoustic generator (35) is a piezoelectric element.

10. The device of any of claims 1 to 9, wherein the fluid characteristic monitored by the monitoring means is selected from a group consisting of volume, viscosity, surface tension, acoustic impedance, acoustic attenuation, solid content, impurity content, and combinations thereof.

11. The device of any of claims 1 to 10, wherein the monitoring means (38) is adapted to monitor the fluid characteristic at desired intervals.

12. The device of claim 11, wherein the desired intervals are periodic.

13. The device of any of claims 1 to 12, wherein the acoustic generator (35) is associated with the introducing means (60).

14. The device of any of claims 1 to 13, further comprising a means for dispensing fluid from the reservoir.

15. The device of claim 14, wherein the acoustic generator is associated with the dispensing means and the monitoring means (38).

16. The device of claim 15, wherein the dispensing means further comprises an acoustic ejector (33).

17. The device of claim 16, wherein the acoustic ejector (33) further comprises a means for focusing (37) acoustic radiation generated by the acoustic generator (35).

18. The device of claim 17. further comprising the acoustic coupling medium (25) between the focusing means (37) and the reservoir (13).

19. The device of any of claims 1 to 18, comprised of a single acoustic generator (35).

20. A method for controlling the composition of a fluid (14) within a reservoir (13), comprising steps of
(a) monitoring a characteristic of a fluid (14) contained in a reservoir (13) without directly contacting the fluid (14), wherein the fluid (1.4) is comprised of a plurality of constituents; and
(b) introducing into the reservoir additional fluid (66) having a composition different from that of the fluid (14) contained in the reservoir (13) based on the fluid characteristic monitored in step (a) to control the composition of the fluid (14) in the reservoir (13) within predetermined bounds
wherein step (a), step (b), or both are carried out by positioning an acoustic radiation generator (55) in acoustic coupling relationship to the reservoir (13) and by generating, once positioned, acoustic radiation that is transmitted through an acoustic coupling medium (25) and through at least a portion of the reservoir (13) into the reservoir (13).

21. The method of claim 20, wherein step (a) comprises:
(a') generating acoustic radiation such that the radiation interacts with the fluid contained in the reservoir (13); and
(a") analyzing the acoustic radiation after interaction with the fluid (14) to assess the fluid characteristic for use in step (b).

22. The method of claim 21, wherein the radiation interacts by transmission through the fluid (14) and is analyzed.

23. The method of claim 22, wherein the transmitted radiation is analyzed after the acoustic radiation is reflected by the free fluid surface (14S) within the reservoir (13).

24. The method of claim 21, wherein steps (a') and (a") are repeated.

25. The method of claim 24, wherein steps (a') and (a") are repeated at predetermined intervals.

26. The method of claim 25, wherein the intervals are periodic.

27. The method of any of claims 20 to 26, wherein step (b) comprises applying acoustic radiation to the source of the selected constituent in a manner effective to transport the selected constituent into the reservoir.

28. The method of any of claims 20 to 27, further comprising step (c) dispensing fluid (14) from the reservoir (13).

29. The method of claim 28, wherein step (c) is carried out before step (a).

30. The method of claim 28, wherein step (c) is carried out after step (b).

31. The method of any of claims 28, 29 or 30, wherein step (c) comprises acoustically dispensing fluid (14) from the reservoir (13).

32. The method of claim 31, wherein step (c) comprises acoustically ejecting fluid (14) from the reservoir (13).

33. The method of claim 32, wherein step (c) comprises employing focused acoustic radiation so as to eject fluid (14) from the reservoir (13).

34. The method of claim 33, wherein step (c) is repeated.

35. The method of claim 34, wherein the fluid (14) is ejected in the form of droplets (14D).

36. The method of claim 35, wherein the droplets are of substantially identical volume.

37. The method of either claim 35 or claim 36, wherein the droplets are of substantially identical composition.

38. The method of claim 36, wherein the droplets are deposited on a substrate surface (51).

39. The method of claim 38, wherein the droplets deposited on the substrate surface (51) form an array.

40. The method of claim 34, wherein step (a) is carried out at least once per occurrence of step (c).

41. The method of claim 40, wherein step (a) is triggered by the occurrence of step (c).

42. The device of claim 1, further comprising:

43. The method of claim 20, further comprising the step of:
(c) repeating steps (a) and (b) for a different reservoir selected from a plurality of reservoirs thereby controlling the composition of the fluids in the reservoirs.

## Patentansprüche

1. Vorrichtung (1) zum Steuern der Zusammensetzung eines Fluids (14) innerhalb eines Behälters (13), umfassend:
einen Schallerzeuger (35) zum Erzeugen von Schallstrahlung;
einen Behälter (13), der ein Fluid (14) enthält, das eine Mehrzahl von Bestandteilen umfasst;
ein Schallkopplungsmedium (25), das zwischen dem Schallerzeuger (35) und dem Behälter (13) angeordnet ist;
Mittel zum Positionieren (61) des Schallerzeugers (35) in einer akustisch gekoppelten Beziehung zu dem Behälter (13), derart, dass die durch den Schallerzeuger (35) erzeugte Schallstrahlung durch mindestens einen Teil des Behälters (13) übertragen wird;
ein Mittel zum Überwachen (38) einer Eigenschaft des Fluids (14), das in dem Behälter (13) enthalten ist, wobei das Überwachungsmittel bezüglich des Behälters (13) extern vorliegt und das in dem Behälter (13) enthaltene Fluid (14) nicht direkt kontaktiert;
eine Quelle (62) von zusätzlichem Fluid (66), das eine Zusammensetzung aufweist, die von derjenigen des in dem Behälter (13) enthaltenen Fluids (14) verschieden ist;
ein Mittel zum Einbringen (60) des zusätzlichen Fluids (66) von der Quelle (62) in den Behälter (13) auf der Basis der Eigenschaft, die durch das Überwachungsmittel (38) überwacht wird, so dass die Zusammensetzung des Fluids (14) in dem Behälter (13) innerhalb vorgegebener Grenzen gesteuert wird;
wobei der Schallerzeuger (35) dem Überwachungsmittel (38), dem Einbringungsmittel (60) oder beiden zugeordnet ist.

2. Vorrichtung nach Anspruch 1, bei welcher der Behälter (13) nicht mehr als etwa 1 ml Fluids enthält.

3. Vorrichtung nach Anspruch 2, bei welcher der Behälter (13) nicht mehr als etwa 1 µl Fluid enthält.

4. Vorrichtung nach Anspruch 3, bei welcher der Behälter (13) nicht mehr als etwa 1 nl Fluid enthält.

5. Vorrichtung nach einem der Ansprüche 1 bis 4, bei welcher der Schallerzeuger (35) dem Überwachungsmittel (38) zugeordnet ist und das Überwachungsmittel ferner eine Analyseeinrichtung zum Analysieren von Schallstrahlung, die durch den Schallerzeuger (35) erzeugt worden ist, umfasst.

6. Vorrichtung nach Anspruch 5, bei der die Analyseeinrichtung so positioniert ist, dass sie Schallstrahlung empfängt, die durch den Schallerzeuger (35) erzeugt und durch das in dem Behälter (13) enthaltene Fluid (14) übertragen worden ist.

7. Vorrichtung nach Anspruch 6, bei der die Analyseeinrichtung so positioniert ist, dass sie Schallstrahlung empfängt, die durch die freie Oberfläche des in dem Behälter (13) enthaltenen Fluids (15) reflektiert worden ist.

8. Vorrichtung nach Anspruch 7, bei der die Anaiyseeinrichtung eine Komponente (36) umfasst, die auch zu dem Schallerzeuger (35) gehört.

9. Vorrichtung nach Anspruch 8, bei der die Komponente (36), welche die Analyseeinrichtung und der Schallerzeuger (35) gemeinsam aufweisen, ein piezoelektrisches Element ist.

10. Vorrichtung nach einem der Ansprüche 1 bis 9, bei der die Fluideigenschaft, die durch das Überwachungsmittel überwacht wird, aus einer Gruppe, bestehend aus Volumen, Viskosität, Oberflächenspannung, akustische Impedanz, akustische Dämpfung, Feststoffgehalt, Verunreinigungsgehalt und Kombinationen davon, ausgewählt ist.

11. Vorrichtung nach einem der Ansprüche 1 bis 10, bei der das Überwachungsmittel (38) angepasst ist, die Fluideigenschaft in gewünschten Intervallen zu überwachen.

12. Vorrichtung nach Anspruch 11, bei der die gewünschten Intervalle periodisch sind,

13. Vorrichtung nach einem der Ansprüche 1 bis 12, bei welcher der Schallerzeuger (35) dem Einbringungsmitte! (60) zugeordnet ist.

14. Vorrichtung nach einem der Ansprüche 1 bis 13, die ferner ein Mittel zum Abgeben von Fluid aus dem Behälter umfasst.

15. Vorrichtung nach Anspruch 14, bei welcher der Schallerzeuger dem Abgabemittel und dem Überwachungsmittel (38) zugeordnet ist.

16. Vorrichtung nach Anspruch 15, bei der das Abgabemittel ferner eine Schallausstoßeinrichtung (33) umfasst.

17. Vorrichtung nach Anspruch 16, bei der die Schallausstoßeinrichtung (33) ferner ein Mittel zum Fokussieren (37) von Schallstrahlung, die durch den Schallerzeuger (35) erzeugt worden ist, umfasst.

18. Vorrichtung nach Anspruch 17, die ferner das akustische Kopplungsmedium (25) zwischen dem Fokussiermittel (37) und dem Behälter (13) umfasst.

19. Vorrichtung nach einem der Ansprüche 1 bis 18, die einen einzelnen Schallerzeuger (35) umfasst.

20. Verfahren zum Steuern der Zusammensetzung eines Fluids (14) innerhalb eines Behälters (13), umfassend Schritte des:
(a) Überwachens einer Eigenschaft eines in einem Behälter (13) enthaltenen Fluids (14) ohne direktes Kontaktieren des Fluids (14), wobei das Fluid (14) eine Mehrzahl von Bestandteilen umfasst; und
(b) Einbringens von zusätzlichem Fluid (66) in den Behälter, das eine Zusammensetzung aufweist, die von derjenigen des in dem Behälter (13) enthaltenen Fluids (14) verschieden ist, auf der Basis der in dem Schritt (a) überwachten Fluideigenschaft zum Steuern der Zusammensetzung des Fluids (14) in dem Behälter (13) innerhalb vorgegebener Grenzen,
wobei Schritt (a), Schritt (b) oder beide durch Positionieren eines Schallstrahlungserzeugers (55) in einer akustisch koppelnden Beziehung zu dem Behälter (13) und durch Erzeugen, sobald die Positionierung erfolgt ist, von Schallstrahlung, die durch ein akustisches Kopplungsmedium (25) und durch mindestens einen Teil des Behälters (13) in den Behälter (13) übertragen wird, durchgeführt wird oder werden.

21. Verfahren nach Anspruch 20, bei dem Schritt (a) umfasst:
(a') Erzeugen von Schallstrahlung, so dass die Strahlung mit dem in dem Behälter (13) enthaltenen Fluid eine Wechselwirkung eingeht; und
(a") Analysieren der Schallstrahlung nach der Wechselwirkung mit dem Fluid (14) zur Bewertung der Fluideigenschaften zur Verwendung im Schritt (b).

22. Verfahren nach Anspruch 21, bei dem die Strahlung durch Übertragen durch das Fluid (14) eine Wechselwirkung eingeht und analysiert wird.

23. Verfahren nach Anspruch 22, bei dem die übertragene Strahlung nach der Reflexion der Schallstrahlung durch die freie Fluidoberfläche (14S) innerhalb des Behälters (13) analysiert wird.

24. Verfahren nach Anspruch 21, bei dem die Schritte (a') und (a") wiederholt werden,

25. Verfahren nach Anspruch 24, bei dem die Schritte (a') und (a") in vorgegebenen Intervalllen wiederholt werden.

26. Verfahren nach Anspruch 25, bei dem die Intervalle periodisch sind.

27. Verfahren nach einem der Ansprüche 20 bis 26, bei dem Schritt (b) das Anwenden von Schallstrahlung auf die Quelle des ausgewählten Bestandteils in einer Weise, die zum Transportieren des ausgewählten Bestsandteils in den Behälter wirksam ist, umfasst.

28. Verfahren nach einem der Ansprüche 20 bis 27, das ferner den Schritt (c) des Abgebens von Fluid (14) von dem Behälter (13) umfasst.

29. Verfahren nach Anspruch 28, bei dem der Schritt (c) vor dem Schritt (a) durchgeführt wird,

30. Verfahren nach Anspruch 28, bei dem der Schritt (c) nach dem Schritt (b) durchgeführt wird.

31. Verfahren nach einem der Ansprüche 28, 29 oder 30, bei dem Schritt (c) das Abgeben von Fluid (14) aus dem Behälter (13) mittels Schall umfasst.

32. Verfahren nach Anspruch 31, bei dem Schritt (c) das Ausstoßen von Fluid (14) aus dem Behälter (13) mittels Schall umfasst.

33. Verfahren nach Anspruch 32, bei dem Schritt (c) die Verwendung von fokussierter Schallstrahlung zum Ausstoßen von Fluid (14) aus dem Behälter (13) umfasst.

34. Verfahren nach Anspruch 33, bei dem Schritt (c) wiederholt wird,

35. Verfahren nach Anspruch 34, bei dem das Fluid (14) in der Form von Tröpfchen (14D) ausgestoßen wird.

36. Verfahren nach Anspruch 35, bei dem die Tröpfchen ein im Wesentlichen identisches Volumen aufweisen.

37. Verfahren nach Anspruch 35 oder 36, bei dem die Tröpfchen eine im Wesentlichen identische Zusammensetzung aufweisen.

38. Verfahren nach Anspruch 36, bei dem die Tröpfchen auf einer Substratoberfläche (51) abgeschieden werden.

39. Verfahren nach Anspruch 38, bei dem die Tröpfchen auf der Substratoberfläche (51) zur Bildung eines Arrays abgeschieden werden.

40. Verfahren nach Anspruch 34, bei dem Schritt (a) pro Vorliegen des Schritts (c) mindestens einmal durchgeführt wird.

41. Verfahren nach Anspruch 40, bei dem Schritt (a) durch das Vorliegen von Schritt (c) ausgelöst wird.

42. Vorrichtung nach Anspruch 1, die ferner ein Mittel zum steuerbaren Abgeben von Fluid von dem Behälter umfasst.

43. Verfahren nach Anspruch 20, das ferner den Schritt des
(c) Wiederholens der Schritte (a) und (b) für einen anderen Behälter umfasst, der aus einer Mehrzahl von Behältern ausgewählt ist, wodurch die Zusammensetzung der Fluide in den Behältern gesteuert wird.

## Revendications

1. Disposif (1) destiné à contrôler la composition d'un liquide (14) à l'interieur d'un réservoir (13) ; comprenant ;
un générateur acoustique (35) pour générer un rayonnement acoustique,
un réservoir (13) contenant un liquide (14) composé d'une pluralité de composants ;
un support de couplage acoustique (25) interposé entre le générateur acoustique (35) et le réservoir (13) ;
un moyen de positionnement du générateur acoustique (35) dans une relation de couplage acoustique avec le réservoir (13) de sorte que le rayonnement acoustique généré par le générateur acoustique (35) soit transmis à travers au moins une partie du réservoir (13);
un moyen de surveillance (38) d'une caractéristique du liquide (14) contenu dans le réservoir (13), dans lequel le moyen de surveillance est externe au réservoir (13) et n'est pas directement en contact avec le liquide (14) contenu dans le réservoir (13);
une source (62) de liquide supplémentaire (66) ayant une composition différente de celle du liquide (14) contenu dans le réservoir (13) ;
un moyen d'introduction (60) du liquide supplémentaire (66) de la source (62) dans le réservoir (13) sur la base de la caractéristique surveillée par le moyen de surveillance (38) de manière à contrôler la composition du liquide (14) dans le réservoir (13) dans des limites prédéterminées ;
dans lequel le générateur acoustique (35) est associé au moyen de surveillance (38), au moyen d'introduction (60), ou aux deux.

2. Dispositif selon la revendication 1, dans lequel le réservoir (13) ne contient pas plus d'environ 1 ml de liquide.

3. Dispositif selon la revendication 2, dans lequel le réservoir (13) ne contient pas plus d'environ 1 µl de liquide.

4. Dispositif selon la revendication 3, dans lequel le réservoir (13) ne contient pas plus d'environ 1 nl de liquide,

5. Dispositif selon l'une quelconque des revendications 1 à 4, dans lequel le générateur acoustique (35) est associé au moyen de surveillance (38) et le moyen de surveillance comprend en outre un analyseur pour analyser le rayonnement acoustique généré par le générateur acoustique (35).

6. Dispositif selon la revendication 5, dans lequel l'analyseur est positionné pour recevoir le rayonnement acoustique généré par le générateur acoustique (35) et transmis à travers le liquide (14) contenu dans le réservoir (13).

7. Dispositif selon la revendication 6, dans lequel l'analyseur est positionné pour recevoir le rayonnement acoustique réfléchi par la surface libre du liquide (15) contenu dans le réservoir (13).

8. Dispositif selon la revendication 7, dans lequel l'analyseur comprend un composant (36) commun au générateur acoustique (35).

9. Dispositif selon la revendication 8, dans lequel le composant (36) commun à l'analyseur et au générateur acoustique (35) est un élément piézo-électrique.

10. Dispositif selon l'une quelconque des revendications 1 à 9, dans lequel la caractéristique de liquide surveillée par le moyen de surveillance est sélectionnée dans un groupe se composant du volume, de la viscosité, de la tension de surface, de l'impédance acoustique, de l'atténuation acoustique, du contenu de solides, du contenu d'impuretés, et des combinaisons de ceux-ci.

11. Dispositif selon l'une quelconque des revendications 1 à 10, dans lequel le moyen de surveillance (38) est apte à surveiller la caractéristique de liquide à des intervalles souhaités.

12. Dispositif selon la revendication 11, dans lequel les intervalles souhaités sont périodiques.

13. Dispositif selon l'une quelconque des revendications 1 à 12, dans lequel le générateur acoustique (35) est associé au moyen d'introduction (60).

14. Dispositif selon l'une quelconque des revendications 1 à 13, comprenant en outre un moyen de distribution du liquide du réservoir.

15. Dispositif selon la revendication 14, dans lequel le générateur acoustique est associé au moyen de distribution et au moyen de surveillance (38).

16. Dispositif selon la revendication 15, dans lequel le moyen de distribution comprend en outre un éjecteur acoustique (33).

17. Dispositif selon la revendication 16, dans lequel l'éjecteur acoustique (33) comprend en outre un moyen de focalisation (37) du rayonnement acoustique généré par le générateur acoustique (35).

18. Dispositif selon la revendication 17, comprenant en outre le support de couplage acoustique (25) entre le moyen de focalisation (37) et le réservoir (13).

19. Dispositif selon l'une quelconque des revendications 1 à 18, composé d'un seul générateur acoustique (35).

20. Procédé de contrôle de la composition d'un liquide (14) à l'intérieur d'un réservoir (13), comprenant les étapes consistant à :
(a) surveiller une caractéristique d'un liquide (14) contenu dans un réservoir (13) sans être en contact direct avec le liquide (14), dans lequel le liquide (14) se compose d'une pluralité de composants ; et
(b) introduire dans le réservoir un liquide supplémentaire (66) ayant une composition différente de celle du liquide (14) contenu dans le réservoir (13) sur la base de la caractéristique de liquide surveillée à l'étape (a) pour contrôler la composition du liquide (14) dans le réservoir (13) dans des limites prédéterminées,
dans lequel l'étape (a), l'étape (b) ou ces deux étapes sont effectuées en positionnant un générateur de rayonnement acoustique (55) dans une relation de couplage acoustique avec le réservoir (13) et en générant, après le positionnement, un rayonnement acoustique qui est transmis à travers un support de couplage acoustique (25) et à travers au moins une partie du réservoir (13) dans le réservoir (13).

21. Procédé selon la revendication 20, dans lequel l'étape (a) comprend les étapes consistant à :
(a') générer un rayonnement acoustique de sorte que le rayonnement interagisse avec le liquide contenu dans le réservoir (13) ; et
(a'') analyser le rayonnement acoustique après l'interaction avec le liquide (14) pour évaluer la caractéristique de liquide à utiliser à l'étape (b).

22. Procédé selon la revendication 21, dans lequel le rayonnement interagit par transmission à travers le liquide (14) et est analysé.

23. Procédé selon la revendication 22, dans lequel le rayonnement transmis est analysé après que le rayonnement acoustique est réfléchi par la surface libre du liquide (14S) à l'intérieur du réservoir (13).

24. Procédé selon la revendication 21, dans lequel les étapes (a') et (a'') sont répétées.

25. Procédé selon la revendication 24, dans lequel les étapes (a') et (a'') sont répétées à des intervalles prédéterminés.

26. Procédé selon la revendication 25, dans lequel les intervalles sont périodiques.

27. Procédé selon l'une quelconque des revendications 20 à 26, dans lequel l'étape (b) comprend l'étape consistant à appliquer un rayonnement acoustique sur la source du composant sélectionné d'une manière efficace pour transporter le composant sélectionné dans le réservoir.

28. Procédé selon l'une quelconque des revendications 20 à 27, comprenant en outre l'étape (c) consistant à distribuer du liquide (14) du réservoir (13).

29. Procédé selon la revendication 28, dans lequel l'étape (c) est effectuée avant l'étape (a).

30. Procédé selon la revendication 28, dans lequel l'étape (c) est effectuée après l'étape (b).

31. Procédé selon l'une quelconque des revendications 28, 29 et 30, dans lequel l'étape (c) comprend l'étape de distribution acoustique du liquide (14) du réservoir (13).

32. Procédé selon la revendication 31, dans lequel l'étape (c) comprend l'étape d'éjection acoustique du liquide (14) du réservoir (13).

33. Procédé selon la revendication 32, dans lequel l'étape (c) comprend l'étape consistant à employer un rayonnement acoustique focalisé de manière à éjecteur du liquide (14) du réservoir (13).

34. Procédé selon la revendication 33, dans lequel l'étape (c) est répétée.

35. Procédé selon la revendication 34, dans lequel le liquide (14) est éjecté sous la forme de gouttelettes (14D).

36. Procédé selon la revendication 35, dans lequel les gouttelettes sont de volume sensiblement identique.

37. Procédé selon la revendication 35 ou 36, dans lequel les gouttelettes sont de composition sensiblement identique.

38. Procédé selon la revendication 36, dans lequel les gouttelettes sont déposées sur une surface de substrat (51).

39. Procédé selon la revendication 38, dans lequel les gouttelettes déposées sur la surface de substrat (51) forment une réseau.

40. Procédé selon la revendication 34, dans lequel l'étape (a) est effectuée au moins une fois par occurrence de l'étape (c).

41. Procédé selon la revendication 40, dans lequel l'étape (a) est déclenchée par l'occurence de l'étape (c).

42. Procédé selon la revendication 1, comprenant en outre :
un moyen de distribution contrôlable du liquide du réservoir.

43. Procédé selon la revendication 20, comprenant en outre l'étape constituant à :
(c) répéter les étapes (a) et (b) pour un réservoir différent sélectionné pluralité de réservoirs afin de contrôler la composition des liquides dans les réservoirs.
